# EUROPÄISCHE PATENTSCHRIFT

(11) **EP 2 409 452 B1**
(45) Veröffentlichungstag und Bekanntmachung des Hinweises auf die Patenterteilung: **30.04.2014**
(21) Anmeldenummer: 10707012.0
(22) Anmeldetag: 04.03.2010
(51) Int. Cl.: H04L 9/30

(54) **VERFAHREN ZUR BEREITSTELLUNG VON KRYPTOGRAFISCHEN SCHLÜSSELPAAREN**
METHOD FOR PROVIDING A CRYPTIC PAIR OF KEYS
PROCÉDÉ DE FOURNITURE DE PAIRES DE CLEFS CRYPTOGRAPHIQUES

(30) Priorität: 20.03.2009 DE 102009001718
(43) Veröffentlichungstag der Anmeldung: 25.01.2012
(73) Patentinhaber: CompuGroup Medical AG, 56070 Koblenz (DE)
(72) Erfinder: SPALKA, Adrian, 56068 Koblenz (DE); LENHARDT, Jan, 56068 Koblenz (DE)
(74) Vertreter: Richardt Patentanwälte PartG mbB
(86) Internationale Anmeldenummer: PCT/EP2010/052746
(87) Internationale Veröffentlichungsnummer: WO 2010/105915

(56) Entgegenhaltungen:
- EP-A1- 1 105 998
- DE-A1- 10 134 489
- DE-A1-102004 044 892
- DE-A1-102004 063 962

## Beschreibung

Die Erfindung betrifft ein Verfahren zur Erzeugung von asymmetrischen kryptografischen Schlüsselpaaren, ein Verfahren zur Entschlüsselung von Daten sowie Datenverarbeitungssysteme und Computerprogrammprodukte.

Chipkarten werden heutzutage in vielfältiger Form zur Ver- und Entschlüsselung von Daten eingesetzt. Ein Anwendungsgebiet für Chipkarten ist die sogenannte elektronische Gesundheitskarte, welche in Zukunft die Krankenversicherungskarte in Deutschland ersetzen soll. Ziel ist es dabei, eine Datenübermittlung zwischen medizinischen Leistungserbringem, Krankenkassen, Apotheken und Patienten in Zukunft kostengünstiger zu gestalten, zu vereinfachen und zu beschleunigen. Dazu gehört auch u.a. die Ermöglichung eines Zugriffs auf einen elektronischen Arztbrief, eine elektronische Krankenakte sowie ein elektronisches Rezept mit Hilfe der elektronischen Gesundheitskarte.

Somit können medizinische Datenobjekte (MDOs), wie ein elektronischer Arztbrief, eine elektronische Patientenakte oder ein elektronisches Rezept verschlüsselt und digital signiert auf einem zentralen Server gespeichert werden. Eine Verschlüsselung erfolgt dabei vorzugsweise über einen symmetrischen Schlüssel, der für jedes neue medizinische Datenobjekt einer elektronischen Patientenakte, wie z.B. einen elektronischen Arztbrief oder ein elektronisches Rezept, individuell zufällig erzeugt wird. Der symmetrische Schlüssel selbst wird nach seiner Erstellung beispielsweise mit einem öffentlichen Schlüssel eines asymmetrischen kryptographischen Schlüsselpaars verschlüsselt und zusammen mit den verschlüsselten medizinischen Datenobjekten auf dem zentralen Server abgelegt. Dieser zur Verschlüsselung verwendete öffentliche Schlüssel bildet zusammen mit einem privaten Schlüssel, welcher auf der elektronischen Gesundheitskarte abgespeichert ist, ein kryptografisches, asymmetrisches Schlüsselpaar.

Damit ist gewährleistet, dass ausschließlich unter Verwendung des geheimen Gesundheitskartenschlüssels ein Zugriff auf die verschlüsselten medizinischen

Datenobjekte möglich ist. Bei einem solchen Zugriff erfolgt zunächst eine Entschlüsselung des verschlüsselten symmetrischen Schlüssels mittels des geheimen Gesundheitskartenschlüssels, woraufhin dann mit dem entschlüsselten symmetrischen Schlüssel eine weitere Entschlüsselung des medizinischen Datenobjekts möglich ist. Wurde bei der Erstellung eines MDOs auch eine digitale Signatur mit dem geheimen Gesundheitskartenschlüssel erzeugt, so kann anschließend die Integrität des MDOs und die Authentizität des MDO-Erzeugers über die digitale Signatur verifiziert werden.

Beispielsweise offenbart die DE 10 2004 051 269 B3 ein Verfahren zur Speicherung von Daten und zur Abfrage von Daten sowie entsprechende Computerprogrammprodukte. Eine personalisierte Chipkarte ermöglicht die Speicherung einer elektronischen Patientenakte auf einem Datenserver. Unter Verwendung der Chipkarte können Daten, wie z.B. ein MDO, einer Patientenakte von einem Praxis-EDV-System einer Arztpraxis verschlüsselt und digital signiert an einen Datenserver übertragen werden.

Eine weitere Anwendung von Chipkarten für Patientendaten ist aus der DE 102 58 769 A1 bekannt.

WO 00/72504 A1 beschreibt ein Verfahren zur Erstellung eines kryptographischen Schlüsselpaares bestehend aus einem öffentlichen und einem privaten Schlüssel. Der private Schlüssel kann aus dem öffentlichen Schlüssel wiederhergestellt bzw. in Erfahrung gebracht werden. Dies geschieht dadurch, dass sich ein Dritter vor der Ableitung des privaten Schlüssels authentifizieren muss, sodass die Notwendigkeit entfällt, den privaten Schlüssel separat von dem öffentlichen Schlüssel zu speichern.

EP 1105998 B1 beschreibt ein Verfahren zur Erzeugung eines asymmetrischen kryptographischen Schlüsselpaares. In besagtem Verfahren wird ein Startwert, der von einem Benutzer eingegeben wird, zur Generierung eines geheimen Kommunikationsschlüssels verwendet. Der geheime Kommunikationsschlüssel dient zur Kommunikation mit einem zuvor ermittelten asymmetrischen Schlüsselpaar bestehend aus einem geheimen und einem öffentlichen Schlüssel.

WO 2008/059475 A1 beschreibt ein Verfahren zur Erzeugung eines kryptographischen Schlüssels. Das Verfahren ermöglicht einen sicheren Austausch von Daten zwischen einem ersten und einem zweiten Gerät. Beiden Geräten ist ein Geheimnis (geheimer, dritten nicht bekannter Datensatz oder Information) zugänglich. Das zweite Gerät hat einen kryptographischen Schlüssel gespeichert, der teilweise von dem Geheimnis abgeleitet ist. Mittels dieses Schlüssels und einer Einweg-Funktion wird vom zweiten Gerät ein Text abgeleitet, mittels dessen sich der Schlüssel wieder in Erfahrung bringen lässt, wobei das erste Gerät in der Lage ist, den Text zu empfangen und mittels des dem ersten Gerät bekannten Geheimnisses zu entschlüsseln.

Bei der Verwendung der elektronischen Gesundheitskarte ergibt sich die Problematik, dass im Falle beispielsweise eines Krankenkassenwechsels und der damit verbundenen Ausgabe einer neuen elektronischen Gesundheitskarte mit entsprechenden neuen asymmetrischen Schlüsselpaaren, ein problemloser Zugriff auf eine elektronische Krankenakte nicht mehr möglich ist, welche zuvor unter Verwendung der alten elektronischen Gesundheitskarte verschlüsselt wurde. Dies bedeutet, dass mit der Ausgabe einer neuen elektronischen Gesundheitskarte eine "Umschlüsselung" der alten elektronischen Krankenakte notwendig wird, was insbesondere bei größeren Datenmengen zeit- und ressourcenintensiv ist.

Ein ähnliches Problem ergibt sich beim Verlust einer elektronischen Gesundheitskarte, was sogar dazu führt, dass ein Zugriff auf die elektronische Krankenakte aufgrund der nun nicht mehr vorhandenen kryptografischen Schlüsselpaare des Patienten überhaupt nicht mehr möglich ist.

Um einen Verlust von kryptografischen Schlüsselpaaren entgegenzutreten, schlägt die DE 101 34 489 B4 ein asymmetrisches Kryptografieverfahren vor, welches unter Verwendung von Recovery-Zertifikaten und sogenannten Recovery-Cards vorschlägt, den geheimen Schlüssel einer Rechnereinrichtung mit Schlüsseln wenigstens zweier unterschiedlicher Recovery-Rechnereinrichtungen zu verschlüsseln und eine entsprechende Anzahl an den verschlüsselten Schlüssel aufweisenden Revocery-Zertifikaten zu erstellen. Dies ermöglicht eine Wiedergewinnung und Nutzung des geheimen Schlüssels, ohne dass dieser außerhalb einer Smartcard im Klartext vorliegt. Demgegenüber liegt der Erfindung die Aufgabe zugrunde, ein verbessertes Verfahren zur Erzeugung von kryptografischen Schüsselpaaren, ein verbessertes Verfahren zur Verschlüsselung von Daten sowie verbesserte Computerprogrammprodukte und verbesserte Datenverarbeitungssysteme zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Erzeugung eines zweiten asymmetrischen kryptografischen Schlüsselpaars und eines ersten asymmetrischen kryptografischen Schlüsselpaares geschaffen, wobei ein erster privater Schlüssel zusammen mit einem ersten öffentlichen Schüssel das erste asymmetrische kryptografische Schlüsselpaar bildet, wobei das Verfahren die folgenden Schritte umfasst:
- Empfang einer beliebig wählbaren Benutzerkennung,
- Berechnen eines zweiten privaten Schlüssels, wobei in die Berechnung ein Zufallswert und die Benutzerkennung eingeht,
- Berechnen eines zweiten öffentlichen Schlüssels aus dem zweiten privaten Schüssel mittels eines asymmetrischen kryptografischen Schlüsselerzeugungsverfahrens, wobei der zweite private und der öffentliche Berechtigungsschlüssel das zweite asymmetrische kryptografische Schlüsselpaar bilden,
- Erzeugung eines ersten Chiffrats durch Verschlüsselung des ersten privaten Schlüssels mit dem zweiten öffentlichen Schlüssel und
- Speicherung des ersten Chiffrats.

Damit setzt sich das Verfahren aus zwei wesentlichen Komponenten zusammen, nämlich zum einen aus dem Merkmal, dass ein zweites asymmetrisches kryptografisches Schlüsselpaar erzeugt wird, welches durch die Speicherung des ersten Chiffrats einen Zugriff auf den ersten privaten Schüssel ermöglicht. In anderen Worten ist damit ein Zugriff auf den ersten privaten Schlüssel entweder unter Verwendung des ersten asymmetrischen kryptografischen Schlüsselpaars, bei welchem der erste private Schlüssel im Klartext vorliegt, möglich. Alternativ besteht die Möglichkeit, durch Entschlüsselung des Chiffrats mit dem zweiten privaten Schlüssel des zweiten asymmetrischen kryptografischen Schlüsselpaars den ersten privaten Schüssel zu erhalten. Vorzugsweise sind Daten über den ersten öffentlichen Schlüssel verschlüsselt, sodass ein Zugriff auf diese Daten unter Verwendung zweier verschiedener asymmetrischer kryptografischer Schlüsselpaare möglich ist. Dieses Prinzip lässt sich auf eine Vielzahl verschiedener Schüsselpaare ausweiten, welche über entsprechende Chiffrate jeweils auf das erste asymmetrische Schüsselpaar rückbezogen sind. Ein Benutzer ist damit in der Lage, mit unterschiedlichen, in seinem Besitz befindlichen Schlüsselpaaren auf seine Datenobjekte zuzugreifen und diese zu entschlüsseln, wobei eine mehrfache Speicherung derselben Datenobjekte, verschlüsselt mit unterschiedlichen kryptografischen Schüsseln des Benutzers nicht nötig ist. Außerdem ermöglicht dies dem Benutzer, nachträglich weitere Schlüsselpaare hinzuzufügen, mit denen die verschlüsselten Datenobjekte auf die gleiche Weise zugänglich sind, wie mit bisher existierenden Schlüsselpaaren. Eine Umschlüsselung der bereits im Informationssystem gespeicherten verschlüsselten Datenobjekte wird dadurch vermieden.

Das zweite Merkmal der vorliegenden Erfindung besteht in den folgenden Schritten:
1. Empfang einer eindeutigen Benutzeridentifikation id und einer der Benutzeridentifikation zugeordneten beliebig wählbaren Benutzerkennung pw.
2. Abbildung der Benutzerkennung auf einen Wert durch eine Funktion g. Bei der Funktion g kann es sich um die Identitätsfunktion oder eine nicht triviale Funktion handeln. Unter dem Aspekt der Sicherheit und Vertraulichkeit ist g vorzugsweise als eine kollisionsfreie Einwegfunktion gewählt (sog. one-way Funktion), wie z.B. eine kryptografische Hashfunktion.
3. Erzeugung eines Zufallswertes z.
4. Berechnung des zweiten privaten Schlüssels durch Anwendung einer Funktion f auf g(Benutzerkennung) und z. Beispielsweise werden g(Benutzerkennung), d.h. das Ergebnis der Anwendung der Funktion g auf die Benutzerkennung, und z miteinander verknüpft und die Funktion f wird auf das Ergebnis dieser Verkettung angewendet. Z.B. kann f eine kryptografische Hash-Funktion sein, die auf die Konkatenation des Hash-Wertes der Benutzerkennung und des Zufallswertes z angewendet wird.
5. Berechnung des zweiten öffentlichen Schlüssels aus dem zweiten privaten Schlüssel, wobei der weitere zweite private und öffentliche Schlüssel ein asymmetrisches kryptografisches Schlüsselpaar bilden. Beispielsweise kann:
   - für elliptische Kurven der zweite öffentliche Schlüssel, der ein Punkt auf der elliptischen Kurve ist, durch Multiplikation des zweiten privaten Schlüssels, der eine ganze Zahl darstellt, mit dem Basispunkt aus den Domainparametern berechnet werden.
   - für RSA wird der zweite öffentliche Schlüssel (eine ganze Zahl) derart berechnet, dass er mit dem zweiten privaten Schlüssel (ebenfalls eine ganze Zahl) eine im RSA-Verfahren definierte Kongruenzrelation erfüllt.

Ausführungsformen der Erfindung haben den Vorteil, dass hier asymmetrische kryptografische Schlüsselpaare erzeugt werden können, wobei dies unter Verwendung einer beliebig wählbaren Benutzerkennung erfolgt. Die Benutzerkennung selbst geht in den Berechnungsalgorithmus für den zweiten privaten und öffentlichen Schlüssel ein.

Es sei angemerkt, dass unter "geheimen Schlüssel" und "privaten Schüssel" jeweils derselbe Schlüssel begrifflich verstanden wird.

Durch die genannten Verfahrensschritte ist es z.B. möglich, dass ein Benutzer Zugriff auf ein Informationssystem mit Datenobjekten, welche unter Verwendung des ersten asymmetrischen kryptografischen Schlüsselpaars verschlüsselt wurden, erlangen kann, ohne dass der Benutzer dieses Schlüsselpaar beispielsweise auf einer Chipkarte vorliegen haben muss. Beispielsweise könnten es die Umstände erfordern, dass der Benutzer Zugriff auf seine Daten in einer Umgebung erlangt, in der die erforderliche Infrastruktur zum Betrieb von Smartcards (Kartenlesegerät, etc.) nicht vorhanden ist. Durch die Verwendung seiner selbst gewählten Benutzerkennung ist der Benutzer dennoch in der Lage, auch ohne Chipkarte sein asymmetrisches kryptografisches Schlüsselpaar zu erzeugen, um so einen Zugriff auf seine verschlüsselten Datenobjekte zu erlangen. Das zweite kryptografische Schüsselpaar lässt sich in diesem Fall aus einer Benutzemame/Passwort-Kombination herleiten, sodass der Benutzer z.B. über eine Weboberfläche auf dieselben Datenobjekte mit dem gleichen Funktionsumfang zugreifen kann, wie bei Benutzung einer Smartcard, auf welcher das zweite asymmetrische kryptografische Schlüsselpaar gespeichert wäre.

Es sei darauf hingewiesen, dass sich dieses Verfahren zur Erzeugung eines asymmetrischen kryptografischen Schlüsselpaars von gängigen Schlüsselerzeugungsverfahren unterscheidet, bei welchen nach heutigem Stand der Technik lediglich eine Zuordnung einer beliebig wählbaren Benutzerkennung zu einem zugehörigen erzeugten kryptografischen Schlüsselpaar möglich ist, nicht hingegen eine funktionale Berechnung von Schlüsselpaaren unter Verwendung der beliebig wählbaren Benutzerkennung selbst, bei der die permanente Speicherung der Zuodnung der Benutzerkennung zum Schlüssel entfällt.

Bei diesen üblichen Verfahren wird eine beliebig gewählte Benutzerkennung oder deren Abbild in einer Tabelle gespeichert und öffentlichen oder privaten Schlüsseln eindeutig zugeordnet, wobei lediglich durch administrative und/oder juristische Regelungen festgelegt wird, dass unbefugte Personen keinen Zugriff auf den privaten Schlüssel haben dürfen. Diese Vorgehensweise beeinträchtigt die Sicherheit erheblich: Bekommt eine unbefugte Person oder auch eine staatliche Stelle aufgrund von diversen Überwachungsgesetzen Zugriff auf die Datenbank, welche die Passwörter den öffentlichen und privaten Schlüsseln zuordnet, so ist die Person oder Organisation sofort in der Lage, durch Zugriff auf diese einzelne schlüsselverwaltende Institution Zugriff auf alle Datenobjekte einer Person zu erhalten.

Damit hat das Verfahren zur Erzeugung eines asymmetrischen kryptografischen Schlüsselpaars den weiteren Vorteil, dass nebst der Möglichkeit einer beliebig wählbaren Benutzerkennung keine zentrale Instanz in Besitz der Kombination von Benutzerkennung (z.B. Passwort) und Schlüsselpaaren gelangen kann, womit ein technischer Beschlagnahmeschutz gewährleistet ist. Der zweite private Schüssel lässt sich lediglich unter Kenntnis eines Zufallswertes und der Benutzerkennung berechnen. Die Erzeugung des zweiten öffentlichen Schlüssels erfordert ebenfalls die Kenntnis des Zufallswertes und der Benutzerkennung, wobei die Benutzerkennung vorzugsweise ausschließlich in geheimer Weise in Kenntnis des entsprechenden Benutzers steht. Damit ist es z.B. nicht mehr möglich, durch Beschlagnahmung oder Diebstahl von zentralen Datenbankservern Zugriff auf kryptografische Schlüsselpaare und damit auf verschlüsselte Daten ohne aktives Mithelfen jener Personen zu erhalten, welche in Besitz ihrer privaten, geheimen Benutzerkennungen stehen.

Ein weiterer Vorteil des erfindungsgemäßen Verfahrens ist, dass selbst bei Wahl der gleichen Benutzerkennung durch verschiedene Benutzer aufgrund des Eingehens des Zufallswertes bei der Erzeugung des weiteren zweiten privaten Schlüssels sichergestellt werden kann, dass niemals das gleiche Schlüsselpaar verschiedenen Benutzern zugeordnet wird.

Es sei ferner darauf hingewiesen, dass Ausführungsformen des erfindungsgemäßen Verfahrens zur Erzeugung eines asymmetrischen kryptografischen Schlüsselpaares auf beliebige Kryptosysteme zur Erzeugung asymmetrischer Schlüsselpaare angewendet werden können, wie z.B. das RSA-, das Rabin- und das Elgamal-Kryptosystem oder kryptografische Verfahren auf elliptischen Kurven. Aus dem zweiten privaten Schlüssel, den man basierend auf der Benutzerkennung und dem Zufallswert erhalten hat, wird der zweite öffentliche Schlüssel berechnet, wobei für diese Berechnung solche Verfahren zur Anwendung kommen können.

Hierzu kann es erforderlich sein, dass der zweite private Schlüssel eine oder mehrere vorgegebene Eigenschaften haben muss und/oder Bedingungen erfüllen muss, die im Rahmen einer Zulässigkeitsprüfung überprüft werden. Wenn sich der weitere erste Schlüssel als für ein gewähltes Verfahren unzulässig erweist, so wird ein neuer Zufallswert generiert, um einen neuen Kandidaten für einen zweiten privaten Schlüssel zu erzeugen, der dann wiederum einer Zulässigkeitsprüfung unterzogen wird. Dies wird solange wiederholt, bis ein zulässiger zweiter privater Schlüssel gefunden worden ist. In diese Zulässigkeitsprüfung können Beschränkungen eingehen, welche sich direkt aus dem Algorithmus zur Durchführung eines entsprechenden asymmetrischen kryptografischen Schlüsselerzeugungsverfahrens ergeben.

Darüber hinaus können auch weitere Einschränkungen in die Zulässigkeitsprüfung eingehen, welche sich z.B. auf die Entropie des erzeugten Schlüssels beziehen oder aus aktuellen Erkenntnissen bezüglich der Angreifbarkeit des entsprechenden Schlüsselerzeugungsverfahrens ergeben. Beispielsweise gibt es für das RSA-Verfahren eine Reihe von allgemein bekannten und regelmäßig ergänzten Beschränkungen, deren Einhaltung bei einer Schlüsselerzeugung von Behördenstellen gefordert wird, um die Angreifbarkeit der erzeugten Schlüsselpaare zu minimieren. Beispielsweise spezifiziert PKCS#1 (Public Key Cryptography Standards) eine Reihe von kryptografischen Spezifikationen für RSA, welche von öffentlichen und privaten RSA-Schlüsselpaaren eingehalten werden müssen. Der in der Entwicklung befindliche Standard PKCS#13 wird die Anforderungen an die Schlüsselerzeugung auf elliptischen Kurven festsetzen.

Ein Aspekt der Erfindung ist, dass die Berechnung des zweiten privaten Schlüssels unter Verwendung einer Funktion g, angewendet auf die Benutzerkennung pw erfolgt. Nach einer Ausführungsform wird entweder die beliebig wählbare Benutzerkennung als solche empfangen und daraufhin unter Verwendung der Funktion g umgewandelt, oder es wird direkt der Funktionswert g(pw) empfangen.

Die Berechnung des zweiten privaten Schlüssels unter Verwendung des Wertes b = g(pw) und des Zufallswertes z hat den Vorteil, dass somit aus verhältnismäßig unsicheren Benutzerkennungen Eingangswerte berechnet werden können, welche eine hohe Zufälligkeit haben und somit in effektiver Weise bei der Berechnung des zweiten privaten Schlüssels die Sicherheit desselben weiter erhöhen. Beispielsweise wird für g die kryptografische Hash-Funktion SHA-256 angewendet.

Erfindungsgemäß wird das Schlüsselpaar für ein Kryptosystem auf elliptischen Kurven berechnet. Eine elliptische Kurve ist gegeben durch die Gleichung y² = x³ + ax + b, wobei die Parameter a und b, wie auch die Koordinaten der Punkte (x,y) auf der Kurve ganze Zahlen aus dem Intervall [0, n-1] sind, wobei n die Ordnung der Kurve ist. Die Werte a, b, n, sowie ein gewählter Kurvenpunkt P bilden die sogenannten DomainParameter der elliptischen Kurve, welche zur Durchführung von kryptografischen Verfahren unter Verwendung des weiteren ersten und weiteren zweiten Schlüssels mit bekannt gegeben werden müssen. Die Anzahl der Punkte, die die Gleichung einer elliptischen Kurve erfüllen, bezeichnet man als die Ordnung n der Kurve. Der zweite private Schlüssel stellt eine natürliche Zahl dar, und der zweite öffentliche Schlüssel, ein Punkt auf der Kurve, ist das Ergebnis der Multiplikation des zweiten privaten Schlüssels mit dem Kurvenpunkt P der elliptischen Kurve.

Die Verwendung eines Kryptosystems auf elliptischen Kurven hat folgende Vorteile:
- Der zweite private Schlüssel kann eine beliebige natürliche Zahl aus dem Intervall [2, n-1] sein. Sie ist an keine weiteren funktionalen Bedingungen gebunden; der Aspekt ihrer Beliebigkeit wird im weiteren Verlauf eine große Rolle spielen.
- Ein Kryptosystem auf elliptischen Kurven zu brechen hat eine sehr hohe Komplexität, die viel höher ist als bei RSA.
- Die Schlüssel sind im Vergleich zu RSA sehr kurz und die Berechnungen auf der Kurve relativ einfach, womit sie vielseitig und effizient implementiert werden können.
- Der zweite öffentliche Schlüssel kann aus dem zweiten privaten Schlüssel einfach und jederzeit wieder berechnet werden.

Über die Funktionen f und g kann sehr effizient aus der Benutzerkennung und dem Zufallswert der zweite private Schlüssel berechnet werden. Damit ist es möglich, durch mathematische Funktionen der gewählten Benutzerkennung das kryptografische Schlüsselpaar zuzuordnen. Wegen dieses funktionellen Zusammenhangs ist hier ein Vorhalten einer tabellarischen Zuordnung von Schlüsselpaar und einer entsprechenden Benutzerkennung nicht notwendig.

Weiter umfasst das erfindungsgemäße Verfahren den Schritt der Zulässigkeitsprüfung des zweiten privaten Schlüssels. Im Rahmen der Zulässigkeitsprüfung wird geprüft, ob der zweite private Schlüssel größer als 1 und kleiner als die Ordnung der elliptischen Kurve ist. Bei Erfüllung dieser Prüfbedingung sind der Zufallswert sowie der zweite private und der zweite öffentliche Schlüssel zulässig. Ist die Prüfbedingung jedoch nicht erfüllt, wird ein neuer Zufallswert gewählt, mit dem ein erneutes Berechnen des zweiten privaten Schlüssels erfolgt sowie ein erneutes Durchführen der Zulässigkeitsprüfung dieses Schlüssels. Dieser Vorgang wird wiederholt, bis die Zulässigkeitsprüfung bestanden wird.

Die Zulässigkeitsprüfung kann um weitere Prüfbedingungen erweitert werden, z.B. um die Prüfung, dass der zweite private Schlüssel eine hohe Zufälligkeit aufweist. Hierzu sei angemerkt, dass in der Kryptografie üblicherweise mit algebraischen Strukturen gearbeitet wird, die nur endlich viele Elemente enthalten. Dies hat seine Ursache darin, dass im Falle einer endlichen Anzahl von Elementen viele in den reellen Zahlen harmlose Probleme schwierig werden, sodass elliptische Kurven mit endlich vielen Elementen effektiv für kryptografische Anwendungen verwendet werden können. Für kryptografische Anwendungen ist es nun wichtig, dass die verwendete algebraische Struktur groß genug ist, das heißt, dass die Anzahl der Punkte auf einer elliptischen Kurve, als Ordnung bezeichnet, ausreichend groß ist. In diesem Kontext muss man in Betracht ziehen, dass der erzeugte zweite private Schlüssel größer sein kann als die Ordnung der elliptischen Kurve. Um hier dennoch eine Assoziation zu ermöglichen, ist es üblich, eine Division des zweiten privaten Schlüssels modulo der Ordnung der elliptischen Kurve durchzuführen. Damit ergibt sich jedoch eine hohe Wahrscheinlichkeit, dass die resultierende Zahl sich in einem unteren Wertebereich des Intervalls [2, r-1] (mit r als der Ordnung der elliptischen Kurve) befindet oder sogar 0 oder 1 ist, sodass sich hiermit die Schwierigkeit reduziert, einen in diesem Wertebereich liegenden Punkt der Kurve mathematisch oder durch Ausprobieren herauszufinden. Durch die Durchführung der Zulässigkeitsprüfung wird somit eine Einschränkung des Wertebereichs, in welchem sich der zweite private Schlüssel befindet, zuverlässig vermieden, sodass sich hiermit die Entropie des zweiten privaten Schlüssels und damit dessen Zufälligkeit in ausreichendem Maße sicherstellen lässt.

Ein weiterer Vorteil der Zulässigkeitsprüfung ist, dass hiermit sichergestellt werden kann, dass eine Verträglichkeit des zweiten privaten Schlüssels mit entsprechenden Programmbibliotheken für elliptische Kurven, wie sie nach dem Stand der Technik verfügbar sind, zuverlässig gewährleistet werden kann.

Es sei hier darauf hingewiesen, dass zur Durchführung des Verfahrens unter Verwendung einer elliptischen Kurvenfunktion die Durchführung der Zulässigkeitsprüfung nicht zwingend notwendig ist. Auch ohne Anwendung der Zulässigkeitsprüfung lassen sich hier Schlüsselpaare erzeugen, welche jedoch unter Umständen je nach Benutzerkennung und Zufallswert nicht sehr hohen Sicherheitsanforderungen Rechnung tragen können, welche für kryptografische Anwendungen gefordert sein könnten. Die Zulässigkeitsprüfung ist im Falle elliptischer Kurven ein weiterer Schritt, um sicherzustellen, dass die erzeugten Schlüsselpaare eben jenen Sicherheitsanforderungen genügen.

Nach einer weiteren Ausführungsform der Erfindung wird der zweite private Schlüssel durch Anwenden einer Funktion f auf die Werte b und z berechnet. Beispielsweise kann f als die Anwendung der kryptografischen Hash-Funktion SHA-256 auf die Konkatenation, also Hintereinanderhängung, von b und z definiert sein.

Durch Anwendung der Funktion f auf den Zufallswert z und den Funktionswert g(pw) wird eine hohe Qualität des zweiten privaten Schlüssels gewährleistet. In anderen Worten, der zweite private Schlüssel weist aufgrund der zufälligen Wahl von z ebenfalls eine hohe Zufälligkeit auf, sodass ein Erraten des zweiten privaten Schlüssels damit praktisch unmöglich gemacht wird.

Nach einer Ausführungsform der Erfindung ist die Bitlänge des Zufallswertes größer oder gleich der Bitlänge der Ordnung der elliptischen Kurve. Außerdem ist nach einer Ausführungsform der Erfindung der Zufallswert so gewählt, dass der Wert des erzeugten zweiten privaten Schlüssels kleiner als die Ordnung der elliptischen Kurve ist. Beide Kriterien haben ebenfalls, wie bereits für die Zulässigkeitsprüfung diskutiert, denselben Effekt, nämlich dass somit eine hohe Entropie des zweiten privaten Schlüssels gewährleistet werden kann. Damit wird in anderen Worten die Sicherheit des zweiten privaten Schlüssels und damit die Sicherheit des Verschlüsselungsverfahrens signifikant erhöht.

Nach einer Ausführungsform der Erfindung wird das Schlüsselpaar für ein RSA-Kryptosystem berechnet. Ein RSA-Kryptosystem ist gegeben durch eine Zahl n, die das Produkt zweier Primzahlen p und q ist (n = p · q), der Zahl d, die der Bedingung ggT(d, (p - 1)·(q - 1)) = 1 genügt und der Zahl e, die der Bedingung e·d ≡ 1 mod (p - 1)·(q - 1) genügt ("ggT" steht für größter gemeinsamer Teiler). Nach der Wahl von d und der Berechnung von e müssen die Werte p, q und (p - 1)·(q - 1) gelöscht werden. Welche der beiden Zahlen e und d der öffentliche und welche der private Schlüssel ist, ist bei RSA grundsätzlich frei wählbar; in dieser Erfindung berechnen die Funktionen f und g aus der Benutzerkennung pw und dem Zufallswert z den zweiten privaten Schlüssel d. Über den erweiterten euklidschen Algorithmus wird dann aus dem zweiten privaten Schlüssel d der zweite öffentliche Schlüssel e berechnet.

Die Vorteile des RSA-Verfahrens sind die Tatsachen, dass das Verfahren bei entsprechend lang gewählten Schlüsseln nach wie vor sehr sicher ist und dass es eine hohe Verbreitung besitzt. Jedoch besitzt RSA auch die Nachteile, dass es aufgrund der erforderlichen großen Schlüssellänge im Betrieb langsam ist und moderne Faktorisierungsalgorithmen Anlass zu der Befürchtung geben, dass RSA in nicht allzu ferner Zukunft gebrochen wird.

Auch für RSA ist es über die Funktionen f und g möglich, aus der Benutzerkennung und dem Zufallswert den zweiten privaten Schlüssel zu berechnen. Damit ist es auch für RSA möglich, durch mathematische Funktionen der gewählten Benutzerkennung ein kryptografisches Schlüsselpaar zuzuordnen. Wegen dieses funktionellen Zusammenhangs ist ein Vorhalten einer tabellarischen Zuordnung von Schlüsselpaar und einer entsprechenden Benutzerkennung auch für RSA nicht notwendig.

Nach einem weiteren Aspekt der Erfindung umfasst das Verfahren den Schritt der Zulässigkeitsprüfung des zweiten privaten RSA-Schlüssels. Im Rahmen der Zulässigkeitsprüfung wird geprüft, ob der zweite private Schlüssel d die Bedingungen
- d liegt im Intervall [2, (p - 1)·(q - 1) - 2 ] und
- 99T(d, (p - 1)·(q - 1)) = 1
erfüllt. Die Zulässigkeitsprüfung kann weitere Bedingungen gemäß den aktuellen Erkenntnissen beinhalten. Bei Erfüllung dieser Prüfbedingungen sind der Zufallswert sowie der zweite private und der zweite öffentliche Schlüssel zulässig. Ist die Prüfbedingung jedoch nicht erfüllt, wird ein neuer Zufallswert z gewählt, mit dem ein erneutes Berechnen des zweiten privaten Schlüssels erfolgt sowie ein erneutes Durchführen der Zulässigkeitsprüfung dieses Schlüssels. Dieser Vorgang wird wiederholt, bis die Zulässigkeitsprüfung bestanden wird.

Nach einer weiteren Ausführungsform der Erfindung wird der Zufallswert von einer Datenbank abgerufen, wobei der Zufallswert eindeutig der Benutzeridentifikation zugeordnet ist. Beispielsweise wird bei einer ersten Durchführung des Verfahrens zur Erzeugung des asymmetrischen Schlüsselpaares einmalig ein Zufallswert von einer vertrauenswürdigen Stelle, z.B. einer Zertifizierungsstelle erzeugt, welcher im Falle der Zulässigkeit des zweiten privaten Schlüssels für kryptografische Vorgänge einem entsprechenden Benutzer zugänglich sein muss. Durch Abspeichern des Zufallswerts in einer Datenbank, zugeordnet der eindeutigen Benutzeridentifikation, kann z.B. ein Computerprogramm, welches das Verfahren zur Erzeugung von asymmetrischen Schlüsselpaaren ausführt, den Zufallswert über eine sichere Kommunikationsverbindung anhand der Benutzeridentifikation abrufen und dazu verwenden, den entsprechenden ersten und gegebenenfalls auch den weiteren zweiten öffentlichen Schlüssel zu generieren.

Vorzugsweise ist der Zufallswert verschlüsselt in der Datenbank abgelegt. Hierzu kann nach einer Ausführungsform der Erfindung eine symmetrische Verschlüsselung, z.B. unter Verwendung von AES-256, Anwendung finden. Die Verwendung eines verschlüsselten Zufallswertes hat den Vorteil, dass damit Wörterbuchangriffe zur versuchsweisen Entschlüsselung des ersten Schlüssels verhindert werden können.

Nach einer weiteren Ausführungsform der Erfindung umfasst das Verfahren ferner den Schritt des Empfangens eines dritten privaten Schlüssels, wobei der dritte private Schlüssel zusammen mit einem dritten öffentlichen Schüssel ein drittes asymmetrisches kryptografisches Schlüsselpaar bildet, und den Empfang eines zweiten Chiffrats. Ferner umfasst das Verfahren das Entschlüsseln des Chiffrats mit dem dritten privaten Schlüssel zum Erhalt des ersten privaten Schlüssels.

Diese Schritte sind notwendig im Falle, dass der erste private Schlüssel nicht im Klartext vorliegt, um so das erste Chiffrat durch Verschlüsselung des ersten privaten Schlüssels mit dem zweiten öffentlichen Schlüssel zu erzeugen. Dies könnte der Fall sein, wenn für einen Benutzer das Benutzerkennung/Zufallswertprinzip implementiert werden soll, der Benutzer jedoch nicht über eine entsprechende Chipkarte verfügt, auf welcher das erste asymmetrische kryptografische Schlüsselpaar abgespeichert ist, sodass daraus direkt das erste Chiffrat erzeugt werden könnte. In diesem Fall wird davon ausgegangen, dass ein weiteres, drittes asymmetrisches kryptografisches Schlüsselpaar vorliegt, unter Verwendung dessen zuvor ein entsprechendes zweites Chiffrat des ersten privaten Schlüssels erzeugt wurde. Wird nun dieses zweite Chiffrat mit dem dritten privaten Schlüssel entschlüsselt, ergibt sich daraus der erste private Schlüssel, welcher daraufhin zur passwortgestützten Erzeugung des ersten Chiffrats verwendet werden kann.

Nach einer weiteren Ausführungsform der Erfindung wird der dritte private Schlüssel von einem tragbaren Datenträger empfangen. Somit wird hier davon ausgegangen, dass der dritte private Schlüssel auf einer entsprechenden Chipkarte abgespeichert ist. Jedoch ist es auch möglich, dass der dritte private Schlüssel ebenfalls unter Anwendung des obig beschriebenen Passwortprinzips hergeleitet wird.

Nach einer weiteren Ausführungsform der Erfindung umfasst das Verfahren ferner den Schritt einer Authentisierung gegenüber der Datenbank, auf welcher die Chiffrate gespeichert sind, wobei das zweite Chiffrat nach erfolgreicher Authentisierung von der Datenbank empfangen wird.

Hieraus ergeben sich mehrere Vorteile: Zum einen ist es möglich, sicherzustellen, dass nur befugte Personen Chiffrate von der Datenbank abrufen können, um damit den ersten privaten Schlüssel zu berechnen. Beispielsweise könnte hier vorgesehen sein, dass im Falle von Ver- und Entschlüsselungsvorgängen von medizinischen Datenobjekten ausschließlich autorisierte medizinische Dienstleister auf die Chiffrate zugreifen können. Sieht man das Datenverarbeitungssystem eines solchen medizinischen Dienstleisters als vertrauenswürdige Stelle, so ist diese in der Lage, Entschlüsselungsvorgänge von Datenobjekten unter Verwendung des ersten privaten Schlüssels vorzunehmen, wobei zu diesem Zweck der erste private Schlüssel im Klartext im Arbeitsspeicher des entsprechenden Datenverarbeitungssystems vorliegen kann. Dabei wird davon ausgegangen, dass hier kein Missbrauch des ersten privaten Schlüssels stattfindet.

Das Konzept von Mehrfachschlüsselpaaren in Verbindung mit Chiffraten, welche auf der Datenbank gespeichert sind, lässt sich damit flexibel um weitere Kriterien erweitern. Beispielsweise ist es möglich, einem Chiffrat eine Gültigkeit nach Zeitintervall, eine Gültigkeit nach Anzahl der Benutzungen oder eine Gültigkeit nach Art der Benutzung zu erweitern:
- Gültigkeit nach Zeitintervall: Es wird serverseitig im Informationssystem gespeichert, innerhalb welches Zeitintervalls als ein Schlüsselpaar gültig ist. Wenn ein Benutzer versucht, ein "abgelaufenes" Schlüsselpaar Kᵢ zu benutzen ,d.h. der Benutzer öffnet eine Sitzung beim Informationssystem, bei der er sich mit dem Schlüsselpaar Kᵢ authentisiert, verweigert das Informationssystem ihm dies.
- Gültigkeit nach Anzahl der Benutzungen: Es wird serverseitig im Informationssystem gespeichert, wie oft ein Schlüsselpaar maximal benutzt werden kann und wie oft es bereits benutzt wurde (d.h. wie oft eine Sitzung unter Verwendung des Schlüsselpaars bei der Authentisierung eröffnet wurde). Wenn die Anzahl der bereits erfolgten Benutzungen eines Schlüsselpaars Kᵢ dessen Maximalanzahl erreicht hat, verweigert das Informationssystem eine erneute Benutzung von Kᵢ; die Sitzung kommt dann also nicht zustande..
- Gültigkeit nach Art der Benutzung: Es wird serverseitig im Informationssystem für jedes Schlüsselpaar gespeichert, welche Operation in einer Sitzung zulässig sind, die unter Verwendung des Schlüsselpaars bei der Authentisierung eröffnet wurde. Wenn der Benutzer eine Operation durchzuführen versucht, die für die gerade bestehende Sitzung nicht zulässig ist, verweigert das Informationssystem dies.

In all diesen Fällen wird, wie bereits obig beschrieben, davon ausgegangen, dass die Ver- und Entschlüsselungsvorgänge von Daten sowie die Entschlüsselungsvorgänge von Chiffraten in einer vertrauenswürdigen Stelle stattfinden, welche nicht in einer vorigen Sitzung entschlüsseltes Chiffrat, d.h. den ersten privaten Schlüssel, in unbefugter Weise speichert, um somit zukünftig auf die Verwendung und den Zugriff auf weitere Chiffrate nicht mehr angewiesen zu sein.

Nach einer weiteren Ausführungsform der Erfindung umfasst das Verfahren ferner den Schritt der Erzeugung eines vierten asymmetrischen kryptografischen Schlüsselpaars, wobei ein vierter privater Schlüssel zusammen mit einem vierten öffentlichen Schlüssel das vierte asymmetrische kryptografische Schlüsselpaar bildet, wobei das Verfahren die Schritte umfasst des Empfangens des vierten öffentlichen Schlüssels, der Erzeugung eines vierten Chiffrats durch Verschlüsselung des ersten privaten Schlüssels mit dem vierten öffentlichen Schlüssel und des Speicherns des vierten Chiffrats. Vorzugsweise werden diese Verfahrensschritte auf einem tragbaren Datenträger durchgeführt, wie z.B. dem tragbaren Datenträger, welcher das erste asymmetrische kryptografische Schlüsselpaar beinhaltet, womit sichergestellt ist, dass der erste private Schlüssel den tragbaren Datenträger, wie z.B. eine Chipkarte, nicht verlässt.

Es sei angemerkt, dass asymmetrische kryptografische Schlüsselpaare allgemein auf tragbaren Datenträgern gespeichert werden können. Solche tragbaren Datenträger können Chipkarten, USB-Sticks, Flash-Drives, tragbare Festplatten, sein. Es ist auch möglich, tragbare Datenträger mit Prozessor zu verwenden, wie z.B. Prozessor-Chipkarten, d.h. sog. Smart Cards, welche in der Lage sind, selbst Entschlüsselungsvorgänge von Chiffraten durchzuführen.

Nach einer weiteren Ausführungsform der Erfindung umfasst das Verfahren ferner den Schritt des Empfangens einer dem asymmetrischen kryptografischen Schlüsselpaar zugeordneten Schlüsselpaarkennung in der vertrauenswürdigen Stelle, wobei das Chiffrat anhand der Schlüsselpaarkennung abgerufen wird. Beispielsweise wird das Chiffrat von einer Datenbank abgerufen. Alternativ dazu ist es zum Beispiel möglich, dass das asymmetrische Schlüsselpaar zusammen mit dem Chiffrat auf einem tragbaren Datenträger, wie zum Beispiel einer Chipkarte, gespeichert ist.

Nach einer weiteren Ausführungsform der Erfindung umfasst das Verfahren den Schritt einer Signaturüberprüfung des mit dem ersten öffentlichen Schlüssel verschlüsselten Datenobjekts, wobei die Signaturüberprüfung die Schritte umfasst des Lesens einer dem Datenobjekt zugeordneten Signatur und der Verifizierung der Signatur des Datenobjekts, wobei die Verifikation mit dem zweiten öffentlichen Schlüssel erfolgt.

Die Durchführung einer zusätzlichen Signaturüberprüfung im Falle einer zuvor erfolgten Signierung des Datenobjekts hat den Vorteil, dass hiermit verifiziert werden kann, dass das Datenobjekt seit dem ursprünglichen Verschlüsselungsvorgang nicht unbefugt modifiziert wurde.

Nach einer weiteren Ausführungsform der Erfindung ist das Datenobjekt mit einem symmetrischen Datenobjektschlüssel verschlüsselt, wobei der symmetrische Datenobjektschlüssel mit dem ersten öffentlichen Schlüssel verschlüsselt ist, wobei das Entschlüsseln des verschlüsselten Datenobjekts in diesem Fall den weiteren Schritt umfasst des Entschlüsselns des verschlüsselten symmetrischen Datenobjektschlüssels mit dem entschlüsselten ersten privaten Schlüssel und dem Entschlüsseln des verschlüsseltes Datenobjekts mit dem entschlüsselten symmetrischen Schlüssel.

Nach einer weiteren Ausführungsform der Erfindung wird der Zufallswert über eine sichere Kommunikationsverbindung von einer Datenbank abgerufen. Dabei ist es möglich, dass die Datenbank, von welcher das Chiffrat abgerufen wird, und von welcher der Zufallswert abgerufen wird, identisch ist.

Nach einer weiteren Ausführungsform der Erfindung ist der Zufallswert verschlüsselt in der Datenbank abgespeichert.

Nach einer weiteren Ausführungsform der Erfindung handelt es sich bei dem Datenobjekt um ein medizinisches Datenobjekt.

In einem weiteren Aspekt betrifft die Erfindung ein Computerprogrammprodukt mit von einem Prozessor ausführbaren Instruktionen zur Durchführung des erfindungsgemäßen Verfahrens.

Nach einer Ausführungsform der Erfindung sind die Computerprogrammprodukte durch Applets oder Browser Plugins ausgebildet. Ebenso ist es möglich, die Computerprogrammprodukte als eigenständige Anwendungen für ein Datenverarbeitungssystem bereitzustellen. Die Verwendung eines Applets oder eines Browser Plugins hat den Vorteil, dass bestehende Datenverarbeitungssysteme zur Durchführung des Verfahrens zur Schlüsselerzeugung und konsequenter Weise auch zur Durchführung von kryptografischen Operationen wie Verschlüsselung, Entschlüsselung sowie Erstellung und Verifikation von digitalen Signaturen, nicht umgerüstet werden müssen: Hier genügt lediglich das Laden eines Applets, beispielsweise über das Internet, welches in sicherer Weise die beschriebenen Operationen durchführen kann.

In einem weiteren Aspekt betrifft die Erfindung ein Datenverarbeitungssystem zur Erzeugung eines zweiten asymmetrischen kryptografischen Schlüsselpaars unter Verwendung einer beliebig wählbaren Benutzerkennung.

In einem weiteren Aspekt betrifft die Erfindung ein Verfahren zur Entschlüsselung von Daten, wobei die Daten mit einem ersten öffentlichen Schlüssel verschlüsselt sind, wobei das Verfahren zunächst den Schritt umfasst des Empfangens eines ersten Chiffrats, wobei das erste Chiffrat einen ersten privaten Schlüssel verschlüsselt mit einem zweiten öffentlichen Schlüssel umfasst, wobei der erste private Schlüssel zusammen mit dem ersten öffentlichen Schlüssel ein asymmetrisches kryptografisches Schlüsselpaar bildet. Dem folgt der Empfang einer Benutzerkennung und eines Zufallswertes, wobei der Zufallswert der Benutzerkennung zugeordnet ist. Die Benutzerkennung kann beispielsweise durch eine Tastatureingabe an einem Datenverarbeitungssystem durch einen Benutzer erfolgen. Anschließend erfolgt das Berechnen eines zweiten privaten Schlüssels, wobei in die Berechnung der Zufallswert und die Benutzerkennung eingehen, wobei der zweite private Schlüssel und der zweite öffentliche Schlüssel ein zweites asymmetrisches kryptografisches Schlüsselpaar bilden. Das erste Chiffrat wird daraufhin mit dem zweiten privaten Schlüssel zum Erhalt des ersten privaten Schlüssels entschlüsselt. Schließlich erfolgt das Entschlüsseln der Daten mit dem ersten privaten Schlüssel.

Damit stehen einem Benutzer zwei Wahlmöglichkeiten zur Verfügung, wie der Benutzer eine Entschlüsselung seiner mit dem ersten öffentlichen Schlüssel verschlüsselten Daten entschlüsseln möchte. Entweder kann der Benutzer direkt seinen ersten privaten Schlüssel, sofern er über diesen verfügt, dazu verwenden, um die Daten zu entschlüsseln. Beispielsweise ist hier denkbar, dass der erste private Schlüssel auf einer Chipkarte des Benutzers abgespeichert ist, sodass der Benutzer unter Verwendung seiner Chipkarte eine Datenentschlüsselung vornehmen kann. Eine Alternative bietet sich dem Benutzer darin, dass er unter Verwendung seiner Benutzerkennung einen zweiten privaten Schlüssel berechnet, daraufhin ein dem zweiten privaten Schlüssel zugeordnetes Chiffrat von einer entsprechenden Datenbank abruft, entschlüsselt, und damit den ersten privaten Schlüssel zu erhalten, um daraufhin wiederum einen Entschlüsselungsvorgang seiner Daten vorzunehmen. Wie bereits oben erwähnt, ist die letztere Alternative insbesondere dann vorteilhaft, wenn eine entsprechende Infrastruktur zum Lesen von Chipkarten nicht vorhanden ist. In diesem Fall ist dennoch gewährleistet, dass ein Benutzer auf seine verschlüsselten Daten zugreifen kann.

In einem weiteren Aspekt betrifft die Erfindung ein Computerprogrammprodukt mit von einem Prozessor ausführbaren Instruktionen zur Durchführung des Entschlüsselungsverfahrens.

In einem weiteren Aspekt betrifft die Erfindung ein Datenverarbeitungssystem zum Entschlüsseln von Daten.

Vorzugsweise handelt es sich bei dem Datenverarbeitungssystem um ein Datenverarbeitungssystem einer vertrauenswürdigen Stelle. Hierbei kann es sich z.B. um eine Zertifizierungsstelle oder ein Trust-Center handeln. Alternativ ist es auch möglich, eine entsprechende, vorzugsweise portable, Hardware bereitzustellen, welche als vertrauenswürdige Stelle das Datenverarbeitungssystem umfasst. In einer weiteren Alternative kann es sich bei der vertrauenswürdigen Stelle um den Client selbst handeln, welcher die kryptografischen Operationen vornimmt. Schließlich ist es auch möglich, dass es sich bei dem Datenverarbeitungssystem um ein Datenverarbeitungssystem handelt, dass auf einem separaten, gesicherten Hardwaremodul abläuft. Hierbei kann z.B. ein Trusted-Platform-Module (TPM) zum Einsatz kommen.

Ausführungsformen der Erfindung sind unter verschiedenen Aspekten vorteilhaft: Die Erfindung ermöglicht die Erzeugung eines invertierten Baumes, der die Schlüsselpaare miteinander in Beziehung setzt. Dies ermöglicht den Ersatz eines verlorengegangenen Schlüsselpaars durch ein anderes Schlüsselpaar des Baums. Ferner ermöglicht dies ein Höchstmaß an Flexibilität beim Einstellen und/oder Abrufen von Datenobjekten. Insbesondere ist ein Zugriff auf die Datenobjekte auch dann möglich, wenn der Inhaber der Schlüssel gerade nicht über einen Computer verfügt oder z.B. aufgrund seiner körperlichen Verfassung nicht in der Lage ist, einen Computer zu bedienen. Hierzu kann der Inhaber sein Passwort z.B. an den Arzt verbal mitteilen, der dann den Zugriff durchführt. Insbesondere ist es hierzu nicht erforderlich, dass der Inhaber, d.h. der Patient, hierzu eine Chipkarte vorlegt oder freischaltet.

Von besonderem weiteren Vorteil ist, dass mehrere der Schlüsselpaare gleichzeitig benutzt werden können, wobei ein Datenobjekt, welches mit einem der Schlüsselpaare verschlüsselt worden ist, mit jedem der anderen Schlüsselpaare entschlüsselt werden kann.

Von besonderem weiteren Vorteil ist, dass ein oder mehrere der Schlüsselpaare mit Attributen versehen werden können, die die Nutzungsmöglichkeit des betreffenden Schlüsselpaars spezifizieren, beispielsweise hinsichtlich der Gültigkeitsdauer, der Anzahl der Benutzungen und/oder des Zwecks der Benutzung.

Im Folgenden werden Ausführungsformen der Erfindung anhand der Zeichnungen näher erläutert. Es zeigen:
- Figur 1: ein Blockdiagramm zur Schlüsselverwaltung,
- Figur 2: ein Blockdiagramm eines Datenverarbeitungssystems,
- Figur 3: ein Flussdiagramm eines Verfahrens zur asymmetrischen Verschlüsselung von Daten,
- Figur 4: ein weiteres Flussdiagramm eines Verfahrens zur Entschlüsselung von Daten mittels eines asymmetrischen Schlüsselverfahrens.

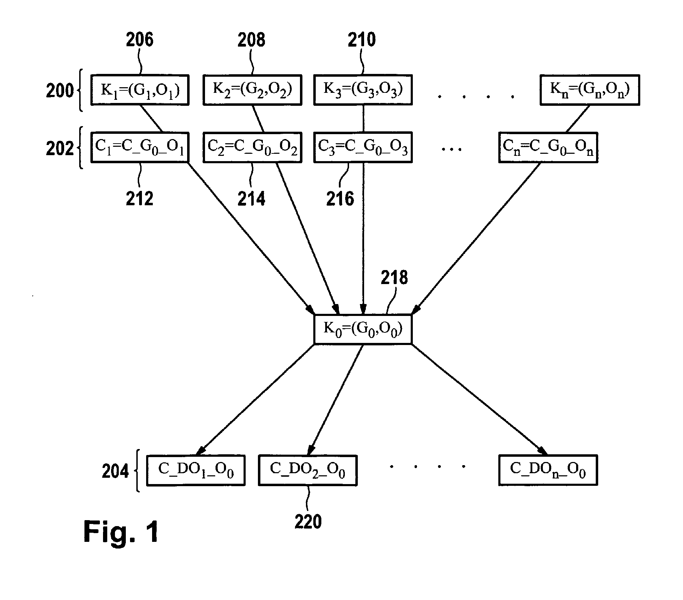

Die Figur 1 zeigt ein Blockdiagramm zur Verwaltung von verschiedenen asymmetrischen kryptografischen Schlüsselpaaren, im Folgenden als Kᵢ bezeichnet. Ohne Beschränkung der Allgemeinheit wird im Folgenden davon ausgegangen, dass die betrachteten kryptografischen Schlüsselpaare nach einem auf elliptischen Kurven basierenden Kryptosystem aufgebaut sind. Weiterhin gelten die folgenden Bezeichnungen:
- *Kᵢ = (Gᵢ, Oᵢ)* mit *i* = 1, 2, 3, ... bezeichne ein asymmetrisches kryptografisches Schlüsselpaar.
- *Gᵢ* bezeichne die geheime Schlüsselpaarkomponente bzw. "den geheimen Schlüssel" oder "privaten Schlüssel" eines asymmetrischen kryptografischen Schlüsselpaars *Kᵢ*.
- *Oᵢ* bezeichne die öffentliche Schlüsselpaarkomponente bzw. "den öffentlichen Schlüssel" eines asymmetrischen kryptografischen Schlüsselpaars *Kᵢ*.
- *V_{A}(DO, Oᵢ)* bezeichne eine auf einem asymmetrischen Kryptosystem basierende Verschlüsselungsfunktion, die auf einem Datenobjekt DO unter Verwendung eines öffentlichen Schlüssels *Oᵢ* ausgeführt wird.
- *C_DO_Oᵢ = V_{A}(DO, Oᵢ)* bezeichne ein "Chiffrat" bzw. das Ergebnis der Verschlüsselungs-funktion *V_{A},* angewendet auf das Datenobjekt DO unter Verwendung des öffentlichen Schlüssels *Oᵢ*.
- *E_{A}(C_DO_Oᵢ, Gᵢ)* = *DO* bezeichne eine auf einem asymmetrischen Kryptosystem basierende Entschlüsselungsfunktion, die auf einem verschlüsselten Datenobjekt *C_DO_Oᵢ* unter Verwendung eines geheimen Schlüssels *Gᵢ* ausgeführt wird. Dabei gilt, dass *Gᵢ* zusammen mit dem für die Verschlüsselung von *C_DO_Oᵢ* verwendeten öffentlichen Schlüssel *Oᵢ* ein asymmetrisches kryptografisches Schlüsselpaar bildet.

In der Figur 1 sind zunächst verschiedene Schlüsselpaare 200 gegeben, wobei Schlüsselpaare K_{1..n} dazu verwendet werden können, um Chiffrate 202 zu entschlüsseln, um damit den privaten Schlüssel G₀ jeweils zu extrahieren. Das Schlüsselpaar 218 K₀ = (G₀, O₀) ist dabei jenes Schlüsselpaar, mittels welchem verschiedene Datenobjekte DOₙ verschlüsselt wurden. Die verschlüsselten Datenobjekte sind im Folgenden mit dem Bezugszeichen 204 gekennzeichnet. Somit kann ein Entschlüsselungsvorgang eines der verschlüsselten Datenobjekte 220 beispielsweise unter Verwendung des privaten Schlüssels G₀ des Schlüsselpaares 218 direkt vorgenommen werden. Alternativ ist es möglich, den privaten Schlüssel Gᵢ eines jeden der Schlüsselpaare 200 zur Entschlüsselung zu verwenden. Wird beispielsweise das Schlüsselpaar 206 K₁ verwendet, so wird zunächst das Chiffrat 212 mit dem privaten Schlüssel G₁ des Schlüsselpaars 206 entschlüsselt, woraus G₀ erhalten wird, womit der Entschlüsselungsvorgang des Datenobjektes 220 vorgenommen werden kann.

Entscheidend ist somit die Verknüpfung zweier asymmetrischer kryptografischer Schlüsselpaare, z.B. K₀ und K₁, welche nach einem beliebigen asymmetrischen Kryptosystem aufgebaut sind.

Dabei wird die Verknüpfung der beiden Schlüsselpaare z.B. 218 und 206 dadurch hergestellt, dass der geheime Schlüssel *G₀* des Schlüsselpaars *K₀* (218) mit dem öffentlichen Schlüssel *O₁* des Schlüsselpaars *K₁* (206) verschlüsselt und das Chiffrat 212, *C_G_{0_}O₁* = *V_{A}(G₀, O₁)* öffentlich gespeichert wird.

Durch die Speicherung und Abrufbarkeit des Chiffrats 212, *C_G_{0_}O₁* wird eine Abhängigkeit zwischen den Schlüsselpaaren *K₁* und *K₀* hergestellt: Ein Benutzer, der im Besitz des geheimen Schlüssels *G₁* ist, kann damit nicht nur alle mit dem zugehörigen öffentlichen Schlüssel *O₁* verschlüsselten Datenobjekte entschlüsseln, sondern auch das Chiffrat 212, *C_G_{0_}O₁,* also den verschlüsselten geheimen Schlüssel *G₀* des Schlüsselpaars *K₀.* Mit *G₀* kann der Benutzer dann auch alle mit dem öffentlichen Schlüssel *O₀* des Schlüsselpaars *K₀* verschlüsselten Datenobjekte 204 entschlüsseln.

Die durch die Speicherung des Chiffrats 212, *C_G₀_O₁* entstandene Abhängigkeit zwischen den beiden Schlüsselpaaren *K₁* und *K₀ ,* die im folgenden als 1:1 Abhängigkeit bezeichnet wird, lässt sich als gerichteter Graph darstellen, bei dem die Schlüsselpaare *K₁* und *K₀* als Knoten 218 und 206 des Graphen dargestellt werden und das öffentlich gespeicherte Chiffrat 212, *C_G_{0_}O₁ = V_{A}(G₀, O₁)* als die gerichtete Kante von *K₁* nach *K₀* zwischen den beiden Knoten 206 und 218. Die Verbindung von *K₁* nach *K₀* besagt also, dass das Chiffrat 212, d.h. C₁= *C_G₀_O₁ = V_{A}(G₀, O₁)* öffentlich gespeichert ist und damit bei Besitz des geheimen Schlüssels *G₁* des Schlüsselpaars *K₁* der geheime Schlüssel *G₀* des Schlüsselpaars *K₀* ebenfalls zugänglich ist.

Geht man von den Schlüsselpaaren K₀ und K₁ aus, so kann weiter gewünscht sein, dass ein weiteres asymmetrisches kryptografisches Schlüsselpaar K₂ (208) hinzugefügt wird. Hier wird der geheime Schlüssel *G₀* von *K₀* mit dem öffentlichen Schlüssel *O₂* von *K₂* verschlüsselt und das Chiffrat 214, *C_G₀_O₂* = *V_{A}(G₀, O₂)* ,gespeichert.

Damit kommt hier der bereits existierenden 1:1-Abhängigkeit von *K₁* nach *K₀* eine weitere 1:1-Abhängigkeit von *K₂* nach *K₀* hinzu, was bedeutet, dass ein Benutzer, sowohl wenn er im Besitz des geheimen Schlüssels *G₁* von *K₁* ist, als auch wenn er im Besitz des geheimen Schlüssels *G₂* von *K₂* ist, auf den geheimen Schlüssel *G₀* von *K₀* zugreifen kann. Weitere Schlüsselpaare *K₂, K₃*, ... , *Kₙ* dem Szenario hinzugefügt werden, wobei *K₀* von jedem einzelnen im Sinne einer 1:1-Abhängigkeit abhängig ist.

In diesem Szenario kann man von unterschiedlichen Schlüsselpaaren aus Zugriff auf den geheimen Schlüssel eines einzigen Schlüsselpaar erlangen; dies soll N:1-Abhängigkeit genannt werden. Figur 1 zeigt den Graphen einer beispielhaften N:1-Abhängigkeit der Schlüssel.

Eine Anwendung der in Figur 1 vorgestellten Abhängigkeitshierarchie ist der Einsatz innerhalb eines Informationssystems, auf das verschiedene Benutzer jeweils mit unterschiedlichen, in ihrem Besitz befindlichen Schlüsselpaaren 206, 208, 210 zugreifen und das für diese Benutzer Datenobjekte in verschlüsselter Form 204 speichert. An dieses Informationssystem werden vorzugsweise verschiedene Forderungen gestellt:

Eine Forderung ist, wie bereits erwähnt, die Zugreifbarkeit der Datenobjekte mit unterschiedlichen Schlüsselpaaren ohne Mehrfachverschlüsselung der Datenobjekte. Der Benutzer muss in der Lage sein, mit unterschiedlichen, in seinem Besitz befindlichen Schlüsselpaaren auf das Informationssystem zuzugreifen und seine Datenobjekte zu entschlüsseln, wobei diese Forderung nicht durch mehrfache Speicherung derselben Datenobjekte, verschlüsselt mit den unterschiedlichen kryptografischen Schlüsseln des Benutzers, gelöst sein darf. Darüber hinaus soll es möglich sein, dem Informationssystem für einen Benutzer nachträglich weitere Schlüsselpaare hinzuzufügen, mit dem die verschlüsselten Datenobjekte auf die gleiche Weise zugänglich sein sollen wie mit den bisher existierenden Schlüsselpaaren. Eine Umschlüsselung der bereits im Informationssystem gespeicherten verschlüsselten Datenobjekte muss dabei vermieden werden.

Eine weitere Forderung ist die Vertraulichkeit der Datenobjekte. Für jeden Benutzer sollen dessen Datenobjekte derartig verschlüsselt im Informationssystem abgelegt sein, dass nur er selbst die Datenobjekte entschlüsseln kann; weder andere Benutzer noch der Betreiber des Informationssystems sollen Zugriff auf die Datenobjekte haben. Daraus folgt, dass die Datenobjekte des Benutzers mit einem kryptografischen Schlüssel verschlüsselt sein müssen, der ein nur dem Benutzer zugängliches Geheimnis als Bestandteil hat und dieses Geheimnis zu keinem Zeitpunkt einem anderen Benutzer und insbesondere dem Betreiber des Informationssystems zugänglich sein darf.

Ein technischer Beschlagnahmeschutz des Informationssystems besteht darin, dass der oben genannte Aspekt, der besagt, dass die zur Entschlüsselung der Datenobjekte benötigten Geheimnisse der Benutzer zu keiner Zeit dem Betreiber des Informationssystems zugänglich sein dürfen, zur Folge hat, dass der Betreiber des Informationssystems zu keiner Zeit die Möglichkeit hat, auf die im Informationssystem verschlüsselt gespeicherten Datenobjekte im Klartext zuzugreifen. Ausführungsformen der Erfindung ermöglichen es also z.B. einem Patienten absolute Datenhoheit über seine medizinischen Datenobjekte zu verschaffen, da ein Zugriff auf die Datenobjekte ohne Mitwirkung des Patienten technisch nicht möglich ist. Die Erfindung ermöglicht es also den zum Teil rechtlich bestehenden Beschlagnahmeschutz durch technische Maßnahmen zu erweitern.

Ein solches Informationssystem ist durch die hierarchische Schlüsselverwaltung gemäß Figur 1 realisiert. Dazu wird für jeden Benutzer des Informationssystems eine Abhängigkeitshierarchie *H = (K, C) =* ({*K₀,* ... , *Kₙ*}, {*C₁,* ... , *Cₙ*}) in Form eines zweistufigen umgedrehten Baumes dem Informationssystem hinzugefügt, bei dem ein Schlüsselpaar *K₀* von *n* weiteren Schlüsselpaaren *K₁*, ... , *Kₙ* über die Abhängigkeitsbeziehungen *C₁*, ... , *Cₙ* abhängig ist. Für jeden Benutzer B des Informationssystems werden alle Datenobjekte *DOi* mit dem jeweiligen öffentlichen Schlüssel *O₀* des Schlüsselpaars *K₀* des Benutzers ggf. mittelbar verschlüsselt und die Chiffrate, *C_DOi_O₀ = V_{A}(DOi, O₀),* insbesondere z.B. das Chiffrat 220 im Informationssystem gespeichert.

Beim Abrufen eines zuvor derartig verschlüsselten Datenobjekts lädt der Benutzer *B*, der zur Entschlüsselung zu diesem Zeitpunkt den geheimen Schlüssel *Gᵢ* des Schlüsselpaars *Kᵢ* verwenden will (bzw. dazu gezwungen ist), neben dem Chiffrat des Datenobjekts *C_DO_O₀* auch das Chiffrat *C_G₀_Oᵢ* des mit dem öffentlichen Schlüssel *Oᵢ* des Schlüsselpaars *Kᵢ* verschlüsselten geheimen Schlüssel *G₀* des Schlüsselpaars *K₀* aus dem Informationssystem, entschlüsselt *G₀ = E_{A}(C_G₀_Oᵢ, Gᵢ)* und entschlüsselt damit anschließend das Datenobjekt *DO = E_{A}(C_DO_O₀, G₀).*

Die oben formulierten Forderungen sind in diesem Informationssystem damit erfüllt. Da der geheime Schlüssel *G₀* des Schlüsselpaars *K₀* (218) für alle Schlüsselpaare aus *K₁,* ... , *Kₙ* (200) in verschlüsselter Form gespeichert und abrufbar ist, können die Datenobjekte für einen Benutzer mit dem geheimen Schlüssel jedes seiner Schlüsselpaare *K₁, ... , Kₙ* (200) entschlüsselt werden. Eine mehrfache Speicherung der Datenobjekte, verschlüsselt mit den verschiedenen Schlüsselpaaren des Benutzers, ist dabei nicht erforderlich.

Ebenso ist es möglich, dem Informationssystem ein weiteres Schlüsselpaar *K*_{*n*+*1*} = (*G*_{*n*+*1*}, *O*_{*n*+*1*}) für einen Benutzer hinzuzufügen, ohne dass ein oder mehrere Chiffrate der bereits im Informationssystem gespeicherten Datenobjekte des Benutzers geöffnet bzw. umgeschlüsselt werden müssen. Dazu muss lediglich der geheime Schlüssel *Gᵢ* eines der bereits bestehenden Schlüsselpaare *Kᵢ* ∈ {*K₁ , ... , Kₙ*} benutzt werden, um *G₀* = *E_{A}(C_G₀_Oᵢ, Gᵢ)* zu entschlüsseln, womit dann das Chiffrat *C_G₀_O*_{*n*+}*₁ = V_{A}*(*G₀, O*_{*n*+*1*}) berechnet werden kann, das dann öffentlich im Informationssystem gespeichert wird. Der Benutzer kann mit diesem neuen Schlüsselpaar sowohl auf alle bisherigen, im Informationssystem gespeicherten Datenobjekte zugreifen als auch auf alle zukünftigen Datenobjekte, die irgendwann im Informationssystem gespeichert werden, egal, welches Schlüsselpaar beim Einstellen der neuen Datenobjekte verwendet wird.

Außerdem kann nur der Benutzer selbst seine eigenen Datenobjekte entschlüsseln, denn nur er ist im Besitz der geheimen Schlüssel *G₁*, ... , *Gₙ*, die benötigt werden, um den geheimen Schlüssel *G₀* des Schlüsselpaars *K₀* (218) zu entschlüsseln. Dabei wird *G₀* immer nur auf Seiten der vertrauenswürdigen Stelle, z.B. des Arztinformationssystems, auf welchem ein Ver- und Entschlüsselungsvorgang von Datenobjekten stattfinden soll, im Klartext zugänglich. Hingegen dem Betreiber des Informationssystems sind vorzugsweise neben den Chiffraten der Datenobjekte nur die Chiffrate *C_G₀_Oᵢ* von *G₀* zugänglich, die er ohne die geheimen Schlüssel *G₁*, ... , *Gₙ*, die nicht in seinem Zugriffsbereich liegen, nicht entschlüsseln kann. Daraus folgt, dass auch der technische Beschlagnahmeschutz mit diesem Informationssystem realisiert ist.

Unter einer "vertrauenswürdige Stelle" wird hier jedes elektronische Gerät, wie z.B. ein Computersystem, verstanden, in dem die schutzbedürftigen Datenobjekte im Klartext vorliegen und/oder in dem Daten zur Überführung der Datenobjekte in Klartext vorliegen und/oder welches Zugriff auf solche Daten hat.

Eine praktische Einsatzmöglichkeit für solche N:1-Schlüsselpaarhierarchien in Informationssystemen ist wie bereits erwähnt, dass der Benutzer Zugriff auf das Informationssystem und seine darin enthaltenen Datenobjekte im Normalfall über das kryptografische Schlüsselpaar *K₁* (206) erlangen kann, das auf einer im Besitz des Benutzers befindlichen SmartCard gespeichert ist. Gleichzeitig könnten die Umstände es aber auch erfordern, dass der Benutzer Zugriff auf das Informationssystem in einer Umgebung erlangt, in der die erforderliche Infrastruktur zum Betrieb von SmartCards (Kartenlesegerät etc.) nicht vorhanden ist, so dass der Benutzer ein zweites kryptografisches Schlüsselpaar *K₂* (208) besitzen muss, welches sich gemäß der vorliegenden Erfindung aus einer Benutzername/Passwort-Kombination herleiten lässt und mit dem der Benutzer, z.B. über eine Web-Oberfläche, auf dieselben Datenobjekte mit dem gleichen Funktionsumfang zugreifen kann wie bei Benutzung der SmartCard.

Ein denkbares Beispiel hierfür wäre etwa eine elektronische Patientenakte, die sich im Besitz eines Benutzers befindet und die online auf einem zentralen Rechner gespeichert ist. Die Forderung nach Vertraulichkeit und technischem Beschlagnahmeschutz der im Informationssystem gespeicherten Datenobjekte würde dem hohen Schutzbedürfnis medizinischer Daten gerecht werden; kein anderer nicht autorisierter Benutzer und auch nicht der Aktenbetreiber selbst hätte Zugriff auf die Datenobjekte des Benutzers.

Darüberhinaus würde der Benutzer Zugriff auf die Datenobjekte in seiner Akte üblicherweise mit einer SmartCard, beispielsweise mit seiner elektronischen Gesundheitskarte, zugreifen; gleichzeitig könnte es jedoch erforderlich sein, dass der Benutzer Zugriff auf seine medizinischen Datenobjekte ohne Benutzung der SmartCard erlangt, etwa im Urlaub von einem Rechner in einem Internet-Café aus, in dem er sich lediglich mit Benutzemame und Passwort authentisieren kann.

In diesem Szenario würde der Benutzer also dauerhaft über zwei verschiedene Schlüsselpaare verfügen, mit denen in jeweils gleichem Umfang auf dieselbe Menge von Datenobjekten zugegriffen werden könnte. Es ist leicht denkbar, das Szenario auf drei oder mehr Schlüsselpaare zu erweitern, mit denen ebenfalls im jeweils gleichen Umfang auf Datenobjekte zugegriffen werden kann.

Zusätzlich kann das Konzept der Mehrfach-Schlüsselpaare um ein zeitliches Gültigkeitsintervall erweitert werden, das für jedes Schlüsselpaar im Informationssystem gespeichert wird. Damit lässt sich der Gültigkeit von Schlüsselpaaren eine zeitliche Beschränkung hinzufügen, die in der Hand des Betreibers des Informationssystems liegt, wodurch beispielsweise der Betreiber der oben erwähnten elektronischen Patientenakte erzwingen kann, dass ein von einem Benutzer erworbener Zugang per Benutzername und Passwort nur über einen bestimmten Zeitraum möglich ist und danach nicht mehr, etwa so lange, wie der Benutzer im Urlaub ist und auf den Benutzername/Passwort-Zugang angewiesen ist.

Eine weitere Anwendungsmöglichkeit von mehrfach vorhandenen Schlüsselpaaren ist die Datenverfügbarkeit im Falle eines verloren gegangenen Schlüsselpaars. Statt mit dem verloren gegangenen Schlüsselpaar wird auf die verschlüsselten Datenobjekte mit einem der alternativen Schlüsselpaare zugegriffen. Ist beispielsweise in der Ausführungsform der Fig. 1 das Schlüsselpaar K₁ verloren gegangen, so kann statt mit K₁ eine Entschlüsselung mit Hilfe von beispielsweise K₂ erfolgen. Die Forderung nach Vertraulichkeit der Datenobjekte innerhalb des Informationssystems inklusive technischem Beschlagnahmeschutz des Informationssystems beinhaltet, dass der Informationssystembetreiber nicht in der Lage sein kann, ein verloren gegangenes Schlüsselpaar zum Informationssystem, d.h. den verloren gegangenen geheimen Schlüssel eines der Schlüsselpaare eines Benutzers, wiederherzustellen, etwa wenn eine SmartCard verloren oder gestohlen wurde, bzw. wenn der Benutzer das Passwort seines Benutzername/Passwortzugangs vergessen hat. Um dies tun zu können, müsste der Betreiber jeweils eine Kopie des geheimen Schlüssels speichern bzw. über Secret-Sharing-Verfahren o.ä. rekonstruieren können, was ihn technisch dazu in die Lage versetzen würde, die Datenobjekte des Benutzers zu entschlüsseln, was wiederum der oben genannten Forderung nach technischem Beschlagnahmeschutz widerspräche.

Die Erfindung bietet nicht die Möglichkeit denjenigen geheimen Schlüssel, der verloren wurde, wiederherzustellen; dafür ist es erfindungsgemäß aber möglich,ein gleichwertiges Schlüsselpaar zu verwenden, das an die Stelle des bisherigen, durch den Verlust des geheimen Schlüssels unbrauchbar gewordenen Schlüsselpaars tritt.

Dazu sei angemerkt, dass eine Wiederherstellung ohnehin nicht den natürlichen Abläufen der meisten Szenarien entspricht, denn von einem verlorenen Schlüssel weiß man nie, ob er von einem Dritten gefunden und eingesetzt werden kann. Hier muss die Gültigkeit eines solchen Schlüsselpaars vorzeitig entzogen werden, damit sein Einsatz von nun an ohne schädigende Wirkung bleibt, was durch die Ungültig-Machung des verlorenen Schlüssels erreicht wird.

Für die Erhaltung der Datenverfügbarkeit wird für jeden Benutzer des Informationssystems dessen N:1-Abhängigkeitshierarchie *H* = (*K, C*) derart erweitert, dass zur Menge *K* = {*K₀, K₁*,... , *Kₙ*} von Schlüsselpaaren ein kryptografisches Schlüsselpaar *Kₓ* hinzugefügt und die Menge *C* = {*C_G₀_O₁*, ... , *C_G0_Oₙ*} ebenfalls um ein Element *C_G₀_Oₓ* = *E_{A}*(*G₀, Oₓ*) erweitert wird.

Dieses neue Schlüsselpaar *Kₓ* sowie die zugehörige neue 1:1-Abhängigkeit von *Kₓ* nach *K₀* (218) sind technisch den in Henthaltenen Schlüsselpaar/1:1-Abhängigkeit-Kombinationen gegenüber gleichwertig; der Unterschied liegt in der intendierten Semantik von *Kₓ* und *C_G₀_Oₓ,* denn diese beiden Elemente werden nie zum Zugriff auf Datenobjekte verwendet, sondern ausschließlich zur Ermittlung des geheimen Schlüssels *G₀* des Schlüsselpaars *K₀* im Zuge der Erstellung eines Ersatzes für ein verloren gegangenes Schlüsselpaar aus {*K₁,* ... , *Kₙ*}.

Wenn der Benutzer etwa neben *K₀* (218) nur ein einziges weiteres Schlüsselpaar *K₁* (206) besäße und den geheimen Schlüssel *G₁* von *K₁* verlieren würde, dann würde er den geheimen Schlüssel *G₀* aus *C_G₀_O₁* nicht mehr entschlüsseln können; da auch der Informationssystembetreiber den geheimen Schlüssel nicht rekonstruieren kann, wären alle Datenobjekte des Benutzers im Informationssystem damit verloren.
In diesem Fall würde das neue Schlüsselpaar *Kₓ* sowie die zugehörige neue 1:1-Abhängigkeit *C_G₀_Oₓ* zum Tragen kommen, mit deren Hilfe *G₀* aus *C_G₀_Oₓ* anstatt aus *C_G₀_O₁* entschlüsselt werden kann. Sobald *G₀* dem Benutzer im Klartext vorliegt, kann er neue Schlüsselpaare *Kᵢ* erzeugen sowie neue 1:1-Abhängigkeiten *C_G₀_Oᵢ,* mit deren Hilfe er auf seine Datenobjekte wie gewohnt zugreifen kann.

Es sollte erwähnt werden, dass für den Fall, dass der Benutzer neben *K₀, K₁* und *C_G₀_O₁* über mindestens eine weitere Kombination von Schlüsselpaar und 1:1-Abhängigkeit verfügt, er genau diese weitere Kombination zur Erstellung von neuen Schlüsselpaaren und 1:1-Abhängigkeiten anstelle von *Kₓ* und *C_G₀_Oₓ* verwenden könnte und dass *Kₓ* und *C_G₀_Oₓ* strenggenommen nur für den eher unwahrscheinlichen Fall relevant werden, dass der Benutzer die geheimen Schlüssel aller seiner Schlüsselpaare *K₁, ... , Kₙ* auf einmal verliert. Angesichts der Tragweite der Konsequenzen dieses Szenarios, nämlich den unwiederbringlichen Verlust aller Datenobjekte des Benutzers, haben die Wiederherstellungs-Schlüsselpaare doch wieder ihre Berechtigung.

Eine weitere Variante von Mehrfach-Schlüsselpaaren ist deren Nutzung als Einmal-Schlüsselpaare, was etwa TAN-Systemen gleichkommt, die beim Online-Banking verwendet werden. Damit ließe sich erzwingen, dass bestimmte Schlüsselpaare nur für eine Sitzung verwendet werden können, was unter bestimmten Anwendungsszenarien gewünscht sein kann.

Dazu hätte ein Benutzer des Informationssystems innerhalb der Menge seiner eigenen Schlüsselpaar/1:1-Abhängigkeit-Kombinationen {(*Kᵢ, C_G_{0_}Oᵢ)* | *i* ∈ {*1*, ... , *n*}} eine Teilmenge dieser Kombinationen serverseitig als "Einmal-Schlüsselpaare" deklariert, was bedeutet, dass die 1:1-Abhängigkeit-Komponente dieser Kombinationen, die ja serverseitig im Informationssystem gespeichert werden, dort entsprechend als nur ein einziges Mal nutzbar markiert werden (auch eine zusätzliche zeitlich beschränkte Gültigkeit solcher Schlüsselpaare könnte sinnvoll sein).

Sobald der Benutzer ein Chiffrat *C_G₀_Oᵢ* vom Informationssystem abruft, das zu einem Einmal-Schlüsselpaar-Satz (*Kᵢ, C_G₀_Oᵢ*) gehört, um daraus den geheimen Schlüssel *G₀* des Schlüsselpaars *K₀* zu berechnen, wird es im Informationssystem gelöscht, so dass der Benutzer den Wert kein zweites Mal abrufen kann und das zugehörige Schlüsselpaar nutzlos ist.

Wie bereits erwähnt, können hinsichtlich einer Zugriffsbeschränkung auf die verschlüsselten Datenobjekte 204 und die Chiffrate 202 verschiedene Zugriffskriterien oder allgemein eine Zugriffsverwaltung implementiert werden. Diese können eine Gültigkeit von Schlüsselpaaren *Kᵢ* nach Zeitintervall, nach Anzahl der Benutzungen oder nach Art der Benutzung aufweisen.

Als Beispiel sei wieder eine elektronische Patientenakte genannt, bei der ein Benutzer (ein Patient) einem anderen Benutzer (ein Arzt) ein Zugriffsrecht auf seine eigene Akte erteilt, jedoch lediglich für maximal fünf Zugriffe auf die Akte und in einem Zeitfenster von nur einem Monat; darüber hinaus darf der Arzt auch ausschließlich lesend auf die Akte des Patienten zugreifen. Der Patient erzeugt also ein neues Schlüsselpaar *K_{P}*, bei dem der geheime Schlüssel *G₀* des Schlüsselpaars des Patienten mit dem öffentlichen Schlüssel *O_{P}* des Arztes verschlüsselt und das Chiffrat *C_G₀_O_{P}* öffentlich im Informationssystem gespeichert wird. Dieses Schlüsselpaar stellt der Patient dem Arzt zur Verfügung.

Eine weitere Möglichkeit ist die Erzeugung eines der Schlüsselpaare Ki mit dem hier offenbarten Benutzername/Passwortverfahren, wobei das Schlüsselpaare Ki attributiert wird. Bei diesem Attribut kann es sich um eine Beschränkung der Verwendbarkeit des Schlüsselpaars Ki hinsichtlich der Anzahl der Nutzungen, der Gültigkeitsdauer und/oder der Zugriffsrechte auf bestimmte der Datenobjekte handeln.

Beispielsweise kann das Schlüsselpaar Ki als so genannte TAN ausgebildet sein, d.h. für eine einmalige Nutzung. Der Patient kann z.B. einem Arzt eine solche TAN telefonisch mitteilen, damit der Arzt Zugriff auf Datenobjekte des Patienten erhält.

Damit hat der Arzt nun innerhalb eines Monats fünf Mal die Möglichkeit, eine Sitzung beim Informationssystem zu eröffnen, innerhalb der er die Akte des Patienten lediglich lesen kann. Ein schreibender Zugriff auf die Akte des Patienten oder ein Versuch Rechte zu vergeben werden vom Informationssystem zurückgewiesen. Nach Ablauf des Zeitintervalls kann der Arzt genauso wie nach der fünften Benutzung keine Sitzung unter Verwendung des Schlüsselpaars *K_{P}* bei der Authentisierung beim Informationssystem mehr eröffnen.

Eine weitere praktische Anwendungsmöglichkeit ist die Einführung einer "Notfallchipkarte", bei welcher z.B. in der Figur 1 ein Einmal-Schlüsselpaar-Satz *K₃* (210) und ein Chiffrat 216, *C_G₀_O₃* zur Anwendung kommt. Diese Notfallchipkarte trägt eine Person ständig bei sich und sie ermöglicht es, im Notfall genau einmal, dass z.B. ein behandelnder Arzt, wie ein Notarzt, in Situationen, in welchen die Person selbst nicht mehr in der Lage ist, einen Benutzername/Passwort Zugang zu ihrer Akte zu ermöglichen, auf die Patientenakte zuzugreifen. Nach diesem einmaligen Zugriff ist diese Chipkarte nicht mehr gültig - das entsprechende Chiffrat 216 wird für weitere Zugriffe gesperrt oder gelöscht. Nichtsdestotrotz kann die Karte des Patienten auf dessen Verlangen jederzeit wieder "reaktiviert" werden, indem das entsprechende der Karte zugeordnete Chiffrat wieder für einen erneuten "einmaligen" Zugriff frei geschaltet wird.

Die allgemein gehaltene Formulierung der Klassifizierungsmerkmale bezüglich der Gültigkeit von Schlüsselpaaren erlaubt vielfältige weitere Anwendungen von Schlüsselpaarabhängigkeiten zur Realisierung von Mehrfach-Schlüsselpaaren.

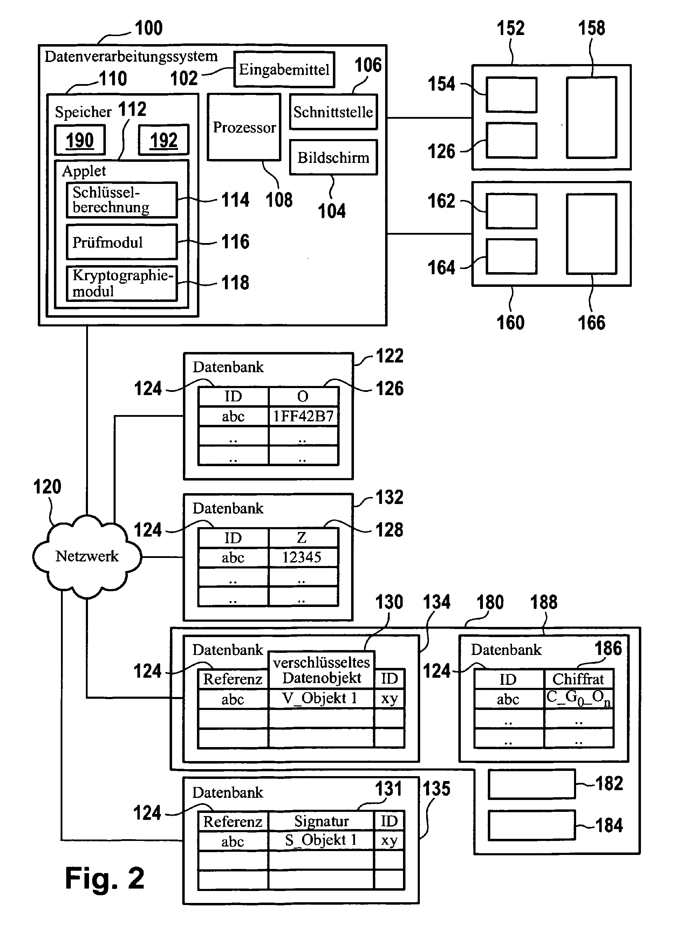

Die Figur 2 zeigt ein Datenverarbeitungssystem 100. Das Datenverarbeitungssystem umfasst Eingabemittel 102, wie zum Beispiel eine Tastatur, eine Maus, ein Pinpad, Mittel zur Erfassung von biometrischen Merkmalen, wie zum Beispiel einen Fingerabdruckscanner oder einen Irisscanner. Ferner umfasst das Datenverarbeitungssystem 100 einen Bildschirm 104 sowie eine Schnittstelle 106, welche zum Beispiel zur Kommunikation mit einem Netzwerk 120, wie dem Internet, verwendet werden kann. Ferner umfasst das Datenverarbeitungssystem 100 einen Prozessor 108, welcher dazu ausgebildet ist, ausführbare Instruktionen zur Durchführung von Verfahrensschritten auszuführen. Diese Instruktionen sind beispielsweise in Form eines Applets 112 im Speicher 110 enthalten.

Beispielsweise kann das Datenverarbeitungssystem 100 zur Erzeugung von asymmetrischen kryptografischen Schlüsselpaaren und zur anschließenden Verschlüsselung und Entschlüsselung von Datenobjekten sowie zur Erzeugung und Verifikation von digitalen Signaturen und für weitere kryptografische Operationen verwendet werden. Dies erfordert zunächst eine Berechnung von Schlüsselpaaren, was beispielsweise mittels des Moduls 114 des Applets 112 erfolgen kann. Zur Berechnung von Schlüsseln wird hierbei mittels des Moduls 114 wie folgt vorgegangen: Über die Eingabemittel 102 wird zunächst eine beliebig wählbare Benutzerkennung von einem Benutzer erhalten. Aus der Benutzerkennung wird daraufhin ein privater Schlüssel berechnet, wobei in die Berechnung ein Zufallswert, welcher durch das Datenverarbeitungssystem 100 erzeugt wird, und die Benutzerkennung eingehen. Dabei ist es möglich, dass zur Verwendung des privaten Schlüssels in kryptografischen Anwendungen zusätzliche Parameter mit veröffentlicht werden müssen, um den privater Schlüssels für die Durchführung kryptografischer Operationen zu nutzen.

Wie bereits oben angemerkt, ist es im Falle von elliptischen Kurven notwendig, zusätzlich zum zweiten privaten und öffentlichen Schlüssel auch die Domainparameter der elliptischen Kurve zur Verfügung zu stellen, welche in Kombination mit dem zweiten privaten und öffentlichen Schlüssel die Anwendung kryptografischer Operationen möglich macht. Ähnlich gilt für RSA, dass die natürliche Zahl n mit veröffentlicht werden muss, um kryptografische Operationen durchführen zu können.

Nach Berechnung des privaten Schlüssels erfolgt eine Prüfung des Schlüssels mittels des Prüfmoduls 116. Diese Prüfung dient einer Zulässigkeitsprüfung des privaten Schlüssels, nämlich, ob der erzeugte Schlüssel verschiedenen Sicherheitsaspekten genügt.

Beispielsweise wird bei elliptischen Kurven der öffentliche Schlüssel aus dem privaten Schlüssel berechnet, indem ein Kurvenpunkt einer elliptischen Kurve mit dem privaten Schlüssel multipliziert wird. In diesem Fall besteht die Zulässigkeitsprüfung des privaten Schlüssels darin, zu prüfen, ob der private Schlüssel größer als 1 und kleiner als die Ordnung der elliptischen Kurve ist, wobei bei Erfüllung dieser Prüfbedingung der Zufallswert und der private und öffentliche Schlüssel zulässig sind. Ist dies jedoch nicht der Fall, muss ein neuer privater Schlüssel und folglich auch ein neuer öffentlicher Schlüssel berechnet werden, indem ein neuer Zufallswert gewählt wird und das Verfahren zur Schlüsselberechnung mittels des Moduls 114 sowie das Verfahren zur Prüfung der erzeugten Schlüssel mittels des Moduls 116 wiederholt durchgeführt wird.

Der zur Schlüsselberechnung verwendete Zufallswert wird daraufhin in einer Datenbank 132 abgelegt und gegebenenfalls verschlüsselt. Dies erfolgt beispielsweise so, dass für den entsprechenden Benutzer eine eindeutige Benutzeridentifikation vergeben wird, wobei dieser Benutzeridentifikation 124 in einer Tabelle der Datenbank 132 der zuvor erzeugte Zufallswert 128 zugeordnet wird. Im vorliegenden Beispiel der Figur 2 ist der Benutzerkennung "abc" der Zufallswert Z mit dem Wert "12345" zugeordnet. Wie bereits oben erwähnt, wird hier vorzugsweise der Zufallswert in verschlüsselter Form in der Datenbank 132 gespeichert, um zuverlässig Wörterbuchangriffe auf den privater Schlüssel zu verhindern.

Im Folgenden sei angenommen, dass in einer Datenbank 134 ebenfalls der Benutzeridentifikation 124 zugeordnet ein Datenobjekt 130 verschlüsselt gespeichert ist, wobei die Benutzeridentifikation 124 hier als Referenz dient. Ein Identifier ID "xy" dient als Zugriffschlüssel auf das Datenobjekt 130. Das Datenobjekt 130 ist dabei mit dem öffentlichen Schlüssel 126 verschlüsselt, welcher in einer Datenbank 122 abgelegt ist. Beispielsweise ist in der Datenbank 122 der Benutzeridentifikation "abc" der öffentliche Schlüssel "1FF42B7" zugeordnet. Um nun das Datenobjekt 130 zu entschlüsseln, muss ein entsprechender Benutzer im Besitz des privaten Schlüssels sein, welcher zusammen mit dem öffentlichen Schlüssel 126 ein asymmetrisches kryptografisches Schlüsselpaar bildet. Im einfachsten Fall verfügt der Benutzer über eine Chipkarte 152, welche neben dem öffentlichen Schlüssel 126 den privaten Schlüssel 154 enthält. Führt der Benutzer die Chipkarte 152 in ein entsprechendes Kartenlesegerät des Datenverarbeitungssystems 100 ein, ist daraufhin der Prozessor 108 des Datenverarbeitungssystems 100 in der Lage, durch Abrufen des verschlüsselten Datenobjekts 130 von Datenbank 134 über das Netzwerk 120 einen Entschlüsselungsvorgang des verschlüsselten Datenobjekts 130 vorzunehmen. Außerdem ist es möglich, dass zusätzlich in einer Datenbank 135 eine Signatur 131 S_Objekt1 des Datenobjekts gespeichert ist. Das Datenobjekt ist dabei mit dem geheimen Schlüssel 154 signiert, welcher dem öffentlichen Schlüssel 126 zugeordnet ist. Die Verifikation der Signatur erfolgt dementsprechend mit dem öffentlichen Schlüssel 126.

Die Datenbank 135 kann dabei Teil der Datenbank 134 sein oder umgekehrt.

Ein alternativer Entschlüsselungsvorgang kann dadurch erfolgen, dass das obig beschriebene Benutzername/Passwortverfahren zur Anwendung kommt, indem aus dem Passwort bzw. allgemein aus dem "Benutzerkennung" der geheime Schlüssel 154 erzeugt wird.

An dieser Stelle sei angemerkt, dass die beliebig wählbare Benutzerkennung, welche über die Eingabemittel 102 in das Datenverarbeitungssystem 100 eingegeben wird, beispielsweise eine Zahlenkombination, eine Zahlen-Buchstaben-Kombination oder auch ein biometrisches Merkmal sein kann. Beispielsweise kann im Falle der Verwendung eines biometrischen Merkmals aus den biometrischen Daten eine Bitfolge in eindeutiger Weise berechnet werden, welche daraufhin als Benutzerkennung in die Schlüsselberechnung mittels des Moduls 114 eingehen kann.

Ferner sei angemerkt, dass insbesondere bei der Ver- und Entschlüsselung von medizinischen Datenobjekten durch das Datenverarbeitungssystem 100 beispielsweise wie folgt vorgegangen wird: Über die Schnittstelle 106 wird beispielsweise ein medizinisches Datenobjekt von einem bildgebenden medizinischen Instrument wie einem Röntgengerät empfangen. Röntgendaten sind typischerweise Bilddaten, welche umfangreiche Datenmengen darstellen. Das Datenverarbeitungssystem erzeugt einen zufälligen symmetrischen Schlüssel, mit welchem diese medizinischen Röntgendaten verschlüsselt werden. Daraufhin werden diese verschlüsselten Daten auf der Datenbank 134 mit der eindeutigen Benutzeridentifikation 124 assoziiert abgelegt. Daraufhin erfolgt eine Verschlüsselung des erzeugten symmetrischen Schlüssels mit dem öffentlichen Schlüssel 126. Dieser so verschlüsselte symmetrische Schlüssel wird ebenfalls auf der Datenbank 134 mit der Benutzeridentifikation 124 und den verschlüsselten Daten assoziiert abgelegt.

Zur Entschlüsselung wird nun der verschlüsselte symmetrische Schlüssel mittels des Kryptografiemoduls 118 entschlüsselt, indem der entsprechende private Schlüssel unter Verwendung der Benutzerkennung wie oben beschrieben erzeugt und für die Entschlüsselung verwendet wird. Mit dem so erhaltenen symmetrischen Schlüssel ist es daraufhin möglich, das verschlüsselte Datenobjekt 130 zu entschlüsseln.

Vorzugsweise werden Datenobjekte 130 in der Datenbank 134 jeweils einzeln verschlüsselt abgespeichert. Selbst im Falle eines Satzes von semantisch zusammengehörenden Datenobjekten wird vorzugsweise jedes einzelne Datenobjekt für sich verschlüsselt in der Datenbank 134 abgespeichert, so dass im Falle eines Abrufens eines einzelnen Datenobjekts eine Übertragung dieses verschlüsselten Datenobjekts 130 an das Datenverarbeitungssystem 100 erfolgt, woraufhin dort seine Entschlüsselung vorgenommen wird. Würde man im Gegensatz dazu für semantisch zusammengehörende Datenobjekte, die in einem einzigen Datenobjekt zusammengefasst, verschlüsselt und abgespeichert wären, aus Gründen der Minimierung des zu transportierenden Datenvolumens die Entschlüsselung in der Datenbank vornehmen, so hätte der Betreiber Zugriff auf die entschlüsselten Datenobjekte. Dahingegen hat die oben beschriebene Vorgehensweise den Vorteil, dass zu keinem Zeitpunkt die Datenbank 134, bzw. deren Betreiber Zugriff auf entschlüsselte Schlüssel oder Datenobjekte erhält.

Eine dritte Alternative, um das verschlüsselte Datenobjekt 130 zu entschlüsseln, bietet sich in der Möglichkeit, dass das obig beschriebene Benutzername/Passwortverfahren im Ergebnis nicht den privaten Schlüssel 154 und den öffentlichen Schlüssel 126 liefert, sondern einen privaten Schlüssel 190 und einen öffentlichen Schlüssel 192, welcher im Speicher 110 nach Durchführung des Benutzername/Passwortverfahrens vorgehalten wird. Der geheime Schlüssel 190 ist dabei mit einem Chiffrat 186 assoziiert, welches in einer Datenbank 188 mit der Benutzerkennung 124 verknüpft gespeichert ist. Durch Abrufen des Chiffrats 186 kann nun das Datenverarbeitungssystem 100 mittels des Kryptografiemoduls 118 eine Entschlüsselung des Chiffrats 186 unter Verwendung des privaten Schlüssels 190 vornehmen. Daraus resultiert der private Schlüssel G₀, welcher dem Schlüssel 154 entspricht. Daraufhin kann wiederum unter Verwendung des Kryptografiemoduls 118 ein Entschlüsselungsvorgang des verschlüsselten Datenobjekts 130 vorgenommen werden.

Optional sind die Datenbanken 134 und 188 in einem separaten Informationssystem, d.h. einem separaten Datenverarbeitungssystem 180, verwaltet. Dieses Datenverarbeitungssystem 180 verfügt über eine Zugriffskontrolle, welche unter Verwendung des Prozessors 184 in Form eines Moduls 182 implementiert ist. Diese Zugriffskontrolle erfordert beispielsweise zunächst eine Authentisierung des Datenverarbeitungssystems 100 gegenüber dem Datenverarbeitungssystem 180. Erst wenn sich das Datenverarbeitungssystem 100 beispielsweise als befugtes Arztinformationssystem gegenüber dem Datenverarbeitungssystem 180 ausgewiesen hat, erhält das Datenverarbeitungssystem 100 lesenden bzw. schreibenden Zugriff auf die Datenbanken 134 und 188.

Ferner kann eine solche Zugriffskontrolle, wie bereits erwähnt, eine Kontrolle hinsichtlich der Gültigkeit der Chiffrate 186 nach Zeitintervall, nach Anzahl der Benutzungen oder nach Art der Benutzung umfassen.

Auch die Datenbank 135 kann Teil des Informationssystems 180 sein. Auch die Datenbanken 122 und 132 müssen nicht zwingend externe Datenbanken sein, sondern diese können ebenfalls im Informationssystem 180 integriert werden.

Das Datenverarbeitungssystem 100 ist ferner dazu ausgebildet, um asymmetrische kryptografische Schlüsselpaare bereitzustellen und diese zu Ver- und Entschlüsselungsvorgängen von Datenobjekten zu verwenden. Im Folgenden sei ohne Beschränkung der Allgemeinheit angenommen, dass beispielsweise ein Benutzer im Besitz einer Chipkarte 152 ist, auf welcher der private Schlüssel 154 und der öffentliche Schlüssel 126 abgespeichert sind. Diese beiden Schüssel 154 und 126 bilden dabei ein asymmetrisches kryptografisches Schlüsselpaar. Eine Verschlüsselung eines Datenobjekts kann mittels des öffentlichen Schlüssels 126 erfolgen. Dies ergibt, wie bereits oben erwähnt, das verschlüsselte Datenobjekt 130, welches zusammen mit der eindeutigen Benutzeridentifikation 124 assoziiert in der Datenbank 134 abgelegt wird. Ein Entschlüsselungsvorgang kann wiederum über den geheimen Schlüssel 154 erfolgen, wobei die Entschlüsselung entweder durch das Kryptograpfiemodul 118 des Datenverarbeitungssystems 100 erfolgt, oder aber durch den Prozessor 158 der Chipkarte 152 selbst, wenn dieser Prozessor eine hohe Leistungsfähigkeit besitzt.

Soll nun ein weiteres asymmetrisches kryptografisches Schlüsselpaar für Ver- und Entschlüsselungsvorgänge bereitgestellt werden, so bietet sich hier die Möglichkeit zum einen in der Verwendung einer zusätzlichen Chipkarte 160, welche einen neuen privaten Schlüssel 162 und einen neuen öffentlichen Schlüssel 164 aufweist, oder aber es gibt zum anderen die Möglichkeit, dass ein Benutzer unter Verwendung des Benutzemame/Passwortverfahrens sich selbst ein neues Passwort, das heißt eine neue Benutzerkennung, aussucht, aus welcher dann ein entsprechender privater und öffentlicher Schlüssel 190 und 192 erzeugt werden. Hinsichtlich der Chipkarte 160 sei angemerkt, dass diese ebenfalls einen Prozessor 166 aufweisen kann, mittels welchem Ver- und/oder Entschlüsselungsprozesse beliebiger Art durchgeführt werden können.

Im ersteren Fall könnte das Szenario sein, dass ein Benutzer der Chipkarte 152 diese Chipkarte durch eine neue Chipkarte 160 ersetzt haben möchte, bzw. neben der Chipkarte 152 eine zusätzliche Chipkarte 160 zur Durchführung von Ver- und Entschlüsselungsvorgängen von Datenobjekten einsetzen möchte. Dabei sei angenommen, dass, wie bereits erwähnt, sich auf der Chipkarte 160 bereits ein neuer privater Schlüssel 162 und ein neuer öffentlicher Schlüssel 164 befinden. Zur "Aktivierung" der Chipkarte 160 werden zunächst in einem vom Datenverarbeitungssystem 100 mittels des Bildschirms 104 angegebenen Reihenfolge die Chipkarten 152 und 160 in ein entsprechendes Lesegerät des Datenverarbeitungssystems 100 eingeführt, oder aber es ist möglich, dass das Datenverarbeitungssystem 100 dazu in der Lage ist, gleichzeitig beide Chipkarten 152 und 160 zu lesen. Im Folgenden sei angenommen, dass ein gleichzeitiger Zugriff auf die Chipkarten 152 und 160 möglich ist. Nachdem ein Benutzer die beiden Chipkarten 152 und 160 in entsprechende Lesegeräte des Datenverarbeitungssystems 100 eingeführt hat, liest das Datenverarbeitungssystem 100 den privaten Schlüssel 154 der Chipkarte 152. Der private Schlüssel 154 wird daraufhin mit dem öffentlichen Schlüssel 164 der neuen Chipkarte 160 verschlüsselt und als Chiffrat 186 in der Datenbank 188 gespeichert. Damit gilt die neue Chipkarte 160 als aktiviert.

Diese Vorgehensweise wird in dieser Form jedoch nur dann durchgeführt, wenn der private Schlüssel 154 das Gegenstück zu jenem öffentlichen Schlüssel 126 ist, mit welchem sämtliche Datenobjekte eines Benutzers verschlüsselt werden sollen. Handelt es sich hingegen bei dem Schlüsselpaar 154/126 um ein Schlüsselpaar, welches keine direkte Entschlüsselung von verschlüsselten Datenobjekten 130 ermöglicht, so muss zunächst durch Zugriff auf die Datenbank 188 ein entsprechendes den Schlüsselpaaren 154/126 zugeordnetes Chiffrat 186 ausgelesen werden und das Chiffrat zum Erhalt des Schlüssels 154 G₀ entschlüsselt werden, um daraufhin G₀ mit dem neuen öffentlichen Schlüssel 164 zu verschlüsseln und als neues Chiffrat 186 in der Datenbank 188 abzulegen.

Möchte nun ein Benutzer eine zusätzliche Benutzername/Passwortkombination zur Datenentschlüsselung einsetzen, so muss er sich zunächst mit einer entsprechenden Benutzeridentifikation gegenüber dem Datenverarbeitungssystem 100 identifizieren. Daraufhin erfolgt die Eingabe einer beliebig wählbaren Benutzerkennung, aus welcher daraufhin das Datenverarbeitungssystem mit dem Modul 114 den privaten Schlüssel berechnet. Diese Schlüsselberechnung erfolgt wiederum unter Verwendung eines Zufallswertes 128, den das Datenverarbeitungssystem 100 zu diesem Zweck zufällig wählt. Der Zufallswert wird daraufhin, vorzugsweise verschlüsselt, in der Datenbank 132 mit der Benutzeridentifikation 124 verknüpft abgelegt. Mittels des Schlüsselberechnungsmoduls 114 erfolgt aus dem soeben erzeugten privaten Schlüssel 190 eine weitere Berechnung des öffentlichen Schlüssels 192.

Zur "Aktivierung" des neuen Schlüsselpaars 190/192 muss daraufhin der Benutzer seine Chipkarte 152 in ein entsprechendes Lesegerät des Datenverarbeitungssystems 100 einführen. Das Datenverarbeitungssystem liest den geheimen Schüssel 154 der Chipkarte 152 aus und verschlüsselt den privaten Schlüssel 154 mit dem öffentlichen Schlüssel 192. Daraus ergibt sich wiederum ein Chiffrat, welches in der Datenbank 188 assoziiert mit der Benutzerkennung 124 abgelegt wird.

Liegt hingegen auf der Chipkarte 152 der private Schlüssel G₀ nicht vor, so muss dieser private Schlüssel Go auf andere Art und Weise besorgt werden. Beispielsweise kann dies wiederum erfolgen, indem der Benutzer eine "alte" Benutzerkennung/Passwortkombination im Datenverarbeitungssystem 100 eingibt, das Datenverarbeitungssystem 100 aus der Datenbank 188 ein entsprechendes assoziierte Chiffrat 186 ausliest, G₀ entschlüsselt, um daraufhin mit dem öffentlichen Schlüssel 192 der neuen Benutzername/Passwortkombination ein neues Chiffrat 186 zu erzeugen.

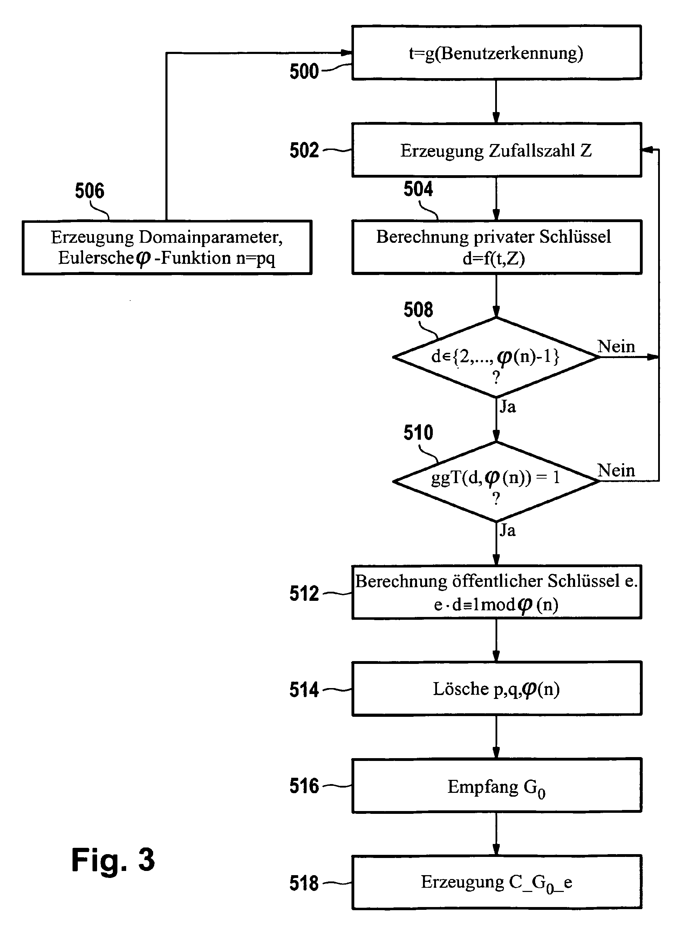

Die Figur 3 zeigt ein Flussdiagramm eines Verfahrens zur Berechnung eines asymmetrischen Schlüsselpaares und eines entsprechenden Chiffrats nach dem RSA-Verfahren. Das Verfahren beginnt mit Schritt 506, indem zwei Primzahlen p und q gemäß den aktuellen Sicherheitsanforderungen für RSA gewählt werden. Die beiden Zahlen werden miteinander multipliziert und das Ergebnis n genannt.

Auf n wird anschließend die Eulersche ϕ-Funktion angewendet, so dass man den Wert ϕ(n) erhält.

Im folgenden Schritt 500 wird eine Benutzerkennung empfangen, auf die die Funktion g angewendet wird, oder es wird direkt der Funktionswert g(Benutzerkennung) empfangen. Darauf folgt Schritt 502, in welchem ein Zufallswert erzeugt wird. Durch Anwendung der Funktion f auf den Zufallswert und g(Benutzerkennung) erfolgt im Schritt 504 die Berechnung eines Kandidaten für den privaten Schlüssel d.

In Schritt 508 erfolgt eine Zulässigkeitsprüfung, wobei die Zulässigkeitsprüfung im Falle des RSA Verfahrens mehrstufig verläuft. So wird zunächst in Schritt 508 geprüft, ob d im Intervall [2, ϕ(n) - 1] liegt.

Ergibt der Prüfschritt 508, dass die Prüfbedingung nicht erfüllt ist, springt das Verfahren zu Schritt 502 zurück, wo ein neuer Zufallswert erzeugt wird. Daraufhin folgen wiederum die Schritte 504 mit dem erneuten Berechnen eines Kandidaten für den privaten Schlüssel d anhand des neuen Zufallswerts und dem erneuten Prüfen des Kandidaten d in Schritt 508. Diese Schleife der Schritte 502, 504 und 508 wiederholt sich so lange, bis die Prüfbedingung in Schritt 508 erfüllt ist. Erst dann setzt sich das Verfahren mit Schritt 510 fort.

Schritt 510 umfasst einen weiteren Prüfschritt, nämlich ob ϕ(n) und der Schlüsselkandidat d teilerfremd sind, d.h ggT(d, ϕ(n)) = 1. Ist dies nicht der Fall, springt das Verfahren wieder zurück zu Schritt 502 und ein neuer Zufallswert wird erzeugt, gefolgt von den Schritten 504, 508, 510. Auch diese Schleife der Schritte 502, 504, 508 und 510 wiederholt sich so lange, bis die Prüfbedingung in Schritt 510 erfüllt ist. Erst dann setzt sich das Verfahren mit Schritt 512 fort. Vorzugsweise wird der Prüfschritt 508 vor dem Prüfschritt 510 durchgeführt, da der Rechenaufwand für Schritt 508 wesentlich geringer ist als der Rechenaufwand für Schritt 510.

In Schritt 512 erfolgt schließlich die Berechnung des öffentlichen Schlüssels e, so dass e die Kongruenz-Beziehung e · d ≡ 1 mod ϕ(n) mit e ∈ [1, ϕ(n) - 1] erfüllt. Zur Verwendung beider Schlüssel in kryptografischen Verfahren muss auch n bekannt gegeben werden.

Im abschließenden Schritt 514 werden die Zahlen p, q, und ϕ (n) verworfen, d.h. gelöscht.

Neben den Prüfschritten 508 und 510 können weitere Prüfschritte zum Einsatz kommen, um so die Sicherheit des erzeugten asymmetrischen Schlüsselpaares zu erhöhen.

Nach Schritt 514 erfolgt der Schritt 516, in welchem der private Schlüssel G₀ empfangen wird. Dieser private Schlüssel G₀ ist dabei Teil des asymmetrischen kryptografischen Schlüsselpaares, mit dessen öffentlichen Schlüssel eine Verschlüsselung an Datenobjekten eines Benutzers erfolgt. Im nachfolgenden Schritt 518 erfolgt die Erzeugung eines Chiffrates, in dem G₀ mit dem in Schritt 512 berechneten öffentlichen Schlüssel e verschlüsselt wird.

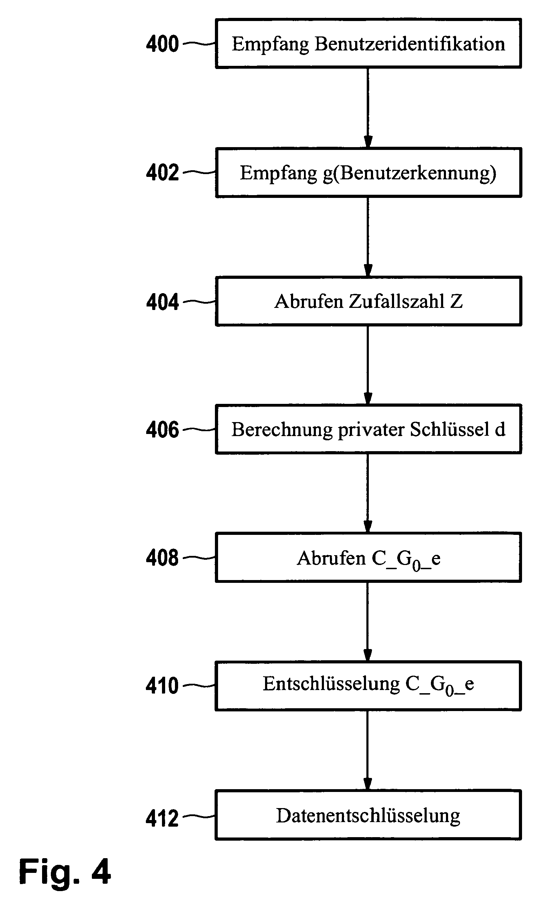

Die Figur 4 zeigt ein Flussdiagramm eines Verfahrens zur Entschlüsselung von Daten. Dabei wird davon ausgegangen, dass die Daten mit einem öffentlichen Schlüssel O₀ verschlüsselt wurden, wobei der öffentliche Schlüssel O₀ Teil eines asymmetrischen kryptografischen Schlüsselpaars K₀ ist, wobei K₀ neben dem öffentlichen Schlüssel O₀ den privaten Schlüssel G₀ aufweist.

In Schritt 400 wird eine Benutzeridentifikation empfangen. Ferner wird in Schritt 402 der Ausgabewert der Funktion g angewendet auf die Benutzerkennung empfangen, wobei g als eine HASH-Funktion zur Anwendung auf die Benutzerkennung ausgebildet sein kann, woraufhin in Schritt 404 anhand der in Schritt 400 empfangenen Benutzeridentifikation eine Zufallszahl Z aus einer entsprechenden Datenbank abgerufen wird. Diese Zufallszahl ist fest mit der Benutzeridentifikation verknüpft. In Schritt 406 wird ein privater Schlüssel d berechnet, wobei in diese Berechnung der Ausgabewert aus Schritt 402 und die Zufallszahl Z aus Schritt 404 eingeht.

In Schritt 408 wird das Chiffrat C_Go_e von einem Datenserver abgerufen, welcher vorzugsweise auch die zu entschlüsselten Datenobjekte enthält. Dieses in Schritt 408 abgerufene Chiffrat weist - in verschlüsselter Form den privaten Schlüssel G₀, verschlüsselt mit dem öffentlichen Schlüssel e auf, wobei der öffentliche Schlüssel e und der private Schlüssel d ein asymmetrisches kryptografisches Schlüsselpaar bilden.

Daraufhin erfolgt in Schritt 410 die Entschlüsselung des Chiffrats, woraus sich der private Schlüssel G₀ ergibt. Schließlich erfolgt anhand von G₀ in Schritt 412 eine Datenentschlüsselung.

### Bezugszeichenliste

- 100: Datenverarbeitungssystem
- 102: Eingabemittel
- 104: Bildschirm
- 106: Schnittstelle
- 108: Prozessor
- 110: Speicher
- 112: Applet
- 114: Modul
- 116: Modul
- 118: Modul
- 120: Netzwerk
- 122: Datenbank
- 124: Benutzeridentifikation
- 126: öffentlicher Schlüssel
- 128: Zufallszahl
- 130: verschlüsseltes Datenobjekt
- 132: Datenbank
- 134: Datenbank
- 152: Chipkarte
- 154: privater Schlüssel
- 158: Prozessor
- 160: Chipkarte
- 162: privater Schlüssel
- 164: öffentlicher Schlüssel
- 166: Prozessor
- 180: Datenverarbeitungssystem
- 182: Modul
- 184: Prozessor
- 188: Datenbank
- 186: Chiffrat
- 135: Datenbank
- 131: Signatur

- 200: Schlüsselpaare
- 202: Chiffrate
- 204: verschlüsselte Datenobjekte
- 206: Schlüsselpaar
- 208: Schlüsselpaar
- 210: Schlüsselpaar
- 212: Chiffrat
- 214: Chiffrat
- 216: Chiffrat
- 218: Schlüsselpaar

## Patentansprüche

1. Verfahren zur Erzeugung eines zweiten asymmetrischen kryptografischen Schlüsselpaars (206) eines Benutzers, wobei ein erster privater Schlüssel (G₀, 154) zusammen mit einem ersten öffentlichen Schlüssel (O₀, 126) ein erstes asymmetrisches kryptografisches Schlüsselpaar (K₀, 218) des Benutzers bildet, wobei das Verfahren die folgenden Schritte umfasst:
- Empfang eines vom Benutzer beliebig wählbaren Passworts,
- Berechnen eines zweiten privaten Schlüssels (G₁), wobei in die Berechnung ein Zufallswert (z) und das Passwort eingeht,
- Berechnen eines zweiten öffentlichen Schlüssels (O₁) aus dem zweiten privaten Schlüssel mittels eines asymmetrischen kryptografischen Schlüsselerzeugungsverfahrens, wobei der zweite private Schlüssel und der zweite öffentliche Schlüssel das zweite asymmetrische kryptografische Schlüsselpaar (K₁, 206) bilden,
- Erzeugung eines ersten Chiffrats (C_G₀_O₁, 212; 186) durch Verschlüsselung des ersten privaten Schlüssels (G₀) mit dem zweiten öffentlichen Schlüssel (O₁),
- Speicherung des ersten Chiffrats (C_G₀_O₁ ; 212; 186),
- Speicherung des Zufallswerts in einer Datenbank (132),
wobei das Verfahren umfasst:
a) Durchführen einer Zulässigkeitsüberprüfung des zweiten privaten Schlüssels mittels einer Prüfbedingung, wobei die Prüfbedingung die Verwendbarkeit des zweiten privaten Schlüssels zur Erzeugung des zweiten öffentlichen Schlüssels aus dem zweiten privaten Schlüssel mittels eines asymmetrischen kryptografischen Schlüsselerzeugungsverfahrens umfasst,
b) wenn die Prüfbedingung erfüllt ist, Berechnen des zweiten öffentlichen Schlüssels aus dem zweiten privaten Schlüssel,
c) wenn die Prüfbedingung nicht erfüllt ist, erneutes Berechnen eines zweiten privaten Schlüssels mit einem neuen Zufallswert und erneutes Durchführen des Schritts a),
wobei es sich bei dem asymmetrischen kryptografischen Schlüsselerzeugungsverfahren zur Berechnung des zweiten öffentlichen Schlüssels um ein Verfahren auf elliptischen Kurven handelt, wobei der zweite öffentliche Schlüssel durch Multiplikation des zweiten privaten Schlüssels mit einem Kurvenpunkt einer elliptischen Kurve berechnet wird, wobei es sich bei der Prüfbedingung um die Bedingung handelt, dass der zweite private Schlüssel größer als eins und kleiner als die Ordnung der elliptischen Kurve ist, und
wobei es sich bei der Prüfbedingung um die Bedingung handelt dass die Bitlänge des Zufallswerts größer oder gleich der Bitlänge der Ordnung der elliptischen Kurve ist.

2. Verfahren nach einem der vorigen Ansprüche, wobei die Berechnung des zweiten privaten Schlüssels die Anwendung einer Einwegfunktion f auf den Zufallswert und einer Funktion g(Passwort) umfasst, wobei die Funktion g auf das Passwort angewendet wird.

3. Verfahren nach Anspruch 2, wobei es sich bei der Funktion g um eine weitere Einwegfunktion handelt.

4. Verfahren nach Anspruch 3, wobei es sich bei der Funktion f und/oder der Funktion g um eine kryptografische Hash-Funktion handelt.

5. Verfahren nach einem der vorigen Ansprüche, wobei es sich bei dem asymmetrischen kryptografschen Schlüsselerzeugungsverfahren zur Berechnung des zweiten öffentlichen Schlüssels um ein Verfahren auf elliptischen Kurven handelt, wobei der zweite öffentliche Schlüssel durch Multiplikation des zweiten privaten Schlüssels mit einem Kurvenpunkt einer elliptischen Kurve berechnet wird.

6. Verfahren nach Anspruch 1, wobei es sich bei der Prüfbedingung um die Bedingung handelt, dass der Zufallswert so gewählt ist, dass der Wert des erzeugten zweiten privaten Schlüssels kleiner als die Ordnung der elliptischen Kurve ist.

7. Verfahren nach einem der Ansprüche 1 bis 4, wobei es sich bei dem asymmetrischen kryptografischen Schlüsselerzeugungsverfahren zur Berechnung des zweiten öffentlichen Schlüssels um ein RSA-Verfahren handelt.

8. Verfahren nach Anspruch 1, wobei es sich bei dem asymmetrischen kryptografischen Schlüsselerzeugungsverfahren zur Berechnung des zweiten öffentlichen Schlüssels um ein RSA-Verfahren handelt, wobei es sich bei der Prüfbedingung um die Bedingung handelt, dass die Eulersche ϕ-Funktion des für das RSA-Schlüsselerzeugungsverfahren verwendeten Modulus n und der zweite private Schlüssel teilerfremd sind.

9. Verfahren nach Anspruch 8, wobei es sich bei der Prüfbedingung ferner um die Bedingung handelt, dass der zweite private Schlüssel einen Wert zwischen 2 und den Wert der ϕ-Funktion des für das RSA-Schlüsselerzeugungsverfahren verwendeten Moduls n minus 1 aufweist.

10. Verfahren nach einem der vorigen Ansprüche, wobei das Verfahren durch ein Applet oder ein Browser-Plugin ausgebildet ist oder eine eigenständige Anwendung ist, die auf einem Rechner einer vertrauenswürdigen Stelle läuft oder eine eingebettete Anwendung ist, die in einem gesicherten HardwareModul läuft.

11. Verfahren nach einem der vorigen Ansprüche, wobei das Verfahren ferner umfasst:
- Empfang eines dritten privaten Schlüssels (G₂), wobei der dritte private Schlüssel zusammen mit einem dritten öffentlichen Schlüssel (O₂) ein drittes asymmetrisches kryptografisches Schlüsselpaar (K₂; 208) bildet,
- Empfang eines zweiten Chiffrats (C_G₀_O₂), wobei das zweite Chiffrat den ersten privaten Schlüssel (G₀) nach Verschlüsselung mit dem dritten öffentlichen Schlüssel (O₂) umfasst,
- Entschlüsseln des zweiten Chiffrats mit dem dritten privaten Schlüssel (G₂) zum Erhalt des ersten privaten Schlüssels (G0).

12. Verfahren nach Anspruch 11, wobei der Empfang des dritten privaten Schlüssels die Schritte umfasst:
- Empfang eines weiteren Passworts,
- Empfang eines weiteren Zufallswertes (z), wobei der weitere Zufallswert dem weiteren Passwort zugeordnet ist,
- Berechnen des dritten privaten Schlüssels (G₂), wobei in die Berechnung der weitere Zufallswert (z) und das weitere Passwort eingehen.

13. Verfahren nach Anspruch 11, wobei der dritte private Schlüssel von einem tragbaren Datenträger empfangen wird.

14. Verfahren nach einem der Ansprüche 11 bis 13, ferner mit dem Schritt einer Authentisierung gegenüber der Datenbank, wobei das zweite Chiffrat nach erfolgreicher Authentisierung von der Datenbank empfangen wird.

15. Verfahren nach einem der vorigen Ansprüche, ferner mit dem Schritt der Erzeugung eines vierten asymmetrischen kryptografischen Schlüsselpaars, wobei ein vierter privater Schlüssel (G₃) zusammen mit einem vierten öffentlichen Schlüssel (O₃) das vierte asymmetrisches kryptografische Schlüsselpaar (K₃) bildet, wobei das Verfahren die folgenden Schritte umfasst:
- Empfang des vierten öffentlichen Schlüssels (G₃),
- Erzeugung eines vierten Chiffrats (C_G₀_O₃) durch Verschlüsselung des ersten privaten Schlüssels (G₀) mit dem vierten öffentlichen Schlüssel (O₃),
- Speicherung des vierten Chiffrats.

16. Verfahren nach einem der vorigen Ansprüche, wobei das Verfahren auf einem tragbaren Datenträger durchgeführt wird.

17. Computerprogrammprodukt mit von einem Prozessor ausführbaren Instruktionen zur Durchführung der Verfahrensschritte des Verfahrens nach einem der vorigen Ansprüche.

18. Datenverarbeitungssystem (100) zur Erzeugung eines zweiten asymmetrischen kryptografischen Schlüsselpaars (206) eines Benutzers, wobei ein erster privater Schlüssel (154) zusammen mit einem ersten öffentlichen Schlüssel (01; 126) ein erstes asymmetrisches kryptografische Schlüsselpaar (K1) des Benutzers bildet, wobei das Datenverarbeitungssystem umfasst:
- Mittel zum Empfang eines vom Benutzer beliebig wählbaren Passworts,
- Mittel (114) zum Berechnen eines zweiten privaten Schlüssels (G2), wobei in die Berechnung ein Zufallswert (z) und das Passwort eingeht,
- Mittel (114) zum Berechnen eines zweiten öffentlichen Schlüssels (02) aus dem zweiten privaten Schlüssel mittels eines asymmetrischen kryptografischen Schlüsselerzeugungsverfahrens, wobei der zweite private und öffentliche Berechtigungsschlüssel das zweite asymmetrische kryptografische Schlüsselpaar (K2) bilden,
- Mittel (118) zur Erzeugung eines ersten Chiffrats (C_G1_O2; 212; 186)) durch Verschlüsselung des ersten privaten Schlüssels (G1) mit dem zweiten öffentlichen Schlüssel (02),
- Mittel zur Speicherung des ersten Chiffrats (212; 186),
- Mittel zum Speichern des Zufallswerts in einer Datenbank (132),
wobei das Datenverarbeitungssystem ferner Mittel umfasst zum Durchführen der folgenden Schritte:
- a) Durchführen einer Zulässigkeitsüberprüfung des zweiten privaten Schlüssels mittels einer Prüfbedingung, wobei die Prüfbedingung die Verwendbarkeit des zweiten privaten Schlüssels zur Erzeugung des zweiten öffentlichen Schlüssels aus dem zweiten privaten Schlüssel mittels eines asymmetrischen kryptografischen Schlüsselerzeugungsverfahrens umfasst,
- b) wenn die Prüfbedingung erfüllt ist, Berechnen des zweiten öffentlichen Schlüssels aus dem zweiten privaten Schlüssel,
- c) wenn die Prüfbedingung nicht erfüllt ist, erneutes Berechnen eines zweiten privaten Schlüssels mit einem neuen Zufallswert und erneutes Durchführen des Schritts a),
wobei es sich bei dem asymmetrischen kryptografischen Schlüsselerzeugungsverfahren zur Berechnung des zweiten öffentlichen Schlüssels um ein Verfahren auf elliptischen Kurven handelt, wobei der zweite öffentliche Schlüssel durch Multiplikation des zweiten privaten Schlüssels mit einem Kurvenpunkt einer elliptischen Kurve berechnet wird, wobei es sich bei der Prüfbedingung um die Bedingung handelt, dass der zweite private Schlüssel größer als eins und kleiner als die Ordnung der elliptischen Kurve ist, und
wobei es sich bei der Prüfbedingung um die Bedingung handelt dass die Bitlänge des Zufallswerts größer oder gleich der Bitlänge der Ordnung der elliptischen Kurve ist.

## Claims

1. A method for generating a second asymmetric cryptographic key pair (206) of a user, wherein a first private key (G₀, 154) together with a first public key (O₀, 126) forms a first asymmetric cryptographic key pair (K₀, 218) of the user, wherein the method comprises the following steps:
- receiving a password that can be selected arbitrarily by the user,
- calculating a second private key (G₁), wherein a random value (z) and the password are used in the calculation,
- calculating a second public key (O₁) from the second private key by means of an asymmetric cryptographic key generation method, wherein the second private key and the second public key form the second asymmetric cryptographic key pair (K₁, 206),
- generating a first cipher (C_G₀_O₁, 212; 186) by encrypting the first private key (G₀ with the second public key (O₁),
- storing the first cipher (C_G₀_O₁, 212; 186),
- storing the random value in a database (132),
wherein the method comprises the following steps:
a) performing an admissibility check of the second private key by means of a check condition, wherein the check condition comprises the usability of the second private key for generating the second public key from the second private key by means of an asymmetric cryptographic key generation method,
b) calculating the second public key from the second private key if the check condition is met,
c) recalculating a second private key with a new random value and performing step a) again if the check condition is not met,
wherein the asymmetric cryptographic key generation method for calculating the second public key is a method based on elliptic curves, wherein the second public key is calculated by multiplication of the second private key by a curve point of an elliptic curve, wherein the check condition is the condition that the second private key is greater than one and less than the order of the elliptic curve, and
wherein the check condition is the condition that the bit length of the random value is greater than or equal to the bit length of the order of the elliptic curve.

2. The method according to one of the preceding claims, wherein the calculation of the second private key comprises the application of a one-way function f to the random value and of a function g (password), wherein the function g is applied to the password.

3. The method according to Claim 2, wherein the function g is a further one-way function.

4. The method according to Claim 3, wherein the function f and/or the function g is a cryptographic hash function.

5. The method according to one of the preceding claims, wherein the asymmetric cryptographic key generation method for calculating the second public key is a method based on elliptic curves, wherein the second public key is calculated by multiplication of the second private key by a curve point of an elliptic curve.

6. The method according to Claim 1, wherein the check condition is the condition that the random value is selected such that the value of the generated second private key is smaller than the order of the elliptic curve.

7. The method according to one of Claims 1 to 4, wherein the asymmetric cryptographic key generation method for calculating the second public key is an RSA method.

8. The method according to Claim 1, wherein the asymmetric cryptographic key generation method for calculating the second public key is an RSA method, wherein the check condition is the condition that Euler's ϕ function of the modulus n used for the RSA key generation method and the second private key are relatively prime.

9. The method according to Claim 8, wherein the check condition is further the condition that the second private key has a value between 2 and the value of the ϕ function of the modulus n minus 1 used for the RSA key generation method.

10. The method according to one of the preceding claims, wherein the method is formed by an applet or a browser plug-in or is an independent application that runs on a computer of a trustworthy location or is an embedded application that runs in a secured hardware module.

11. The method according to one of the preceding claims, wherein the method further comprises:
- receiving a third private key (G₂), wherein the third private key together with a third public key (O₂) forms a third asymmetric cryptographic key pair (K₂; 208),
- receiving a second cipher (C_G₀_O₂), wherein the second cipher comprises the first private key (G₀) after encryption with the third public key (O₂),
- decrypting the second cipher with the third private key (G₂) to obtain the first private key (G0).

12. The method according to Claim 11, wherein the receipt of the third private key comprises the following steps:
- receiving a further password,
- receiving a further random value (z), wherein the further random value is associated with the further password,
- calculating the third private key (G₂), wherein the further random value (z) and the further password are used in the calculation.

13. The method according to Claim 11, wherein the third private key is received by a portable data carrier.

14. The method according to one of Claims 11 to 13, further comprising the step of authentication to the database, wherein the second cipher is received after successful authentication by the database.

15. The method according to one of the preceding claims, further comprising the step of generating a fourth asymmetric cryptographic key pair, wherein a fourth private key (G₃) together with a fourth public key (O₃) forms the fourth asymmetric cryptographic key pair (K₃), wherein the method comprises the following steps:
- receiving the fourth public key (G₃),
- generating a fourth cipher (C_G₀_O₃) by encryption of the first private key (G₀) with the fourth public key (O₃),
- storing the fourth cipher.

16. The method according to one of the preceding claims, wherein the method is performed on a portable data carrier.

17. A computer program product comprising instructions executable by a processor for performing the method steps of the method according to one of the preceding claims.

18. A data processing system (100) for generating a second asymmetric cryptographic key pair (206) of a user, wherein a first private key (154) together with a first public key (O1; 126) forms a first asymmetric cryptographic key pair (K1) of the user, wherein the data processing system comprises:
- means for receiving a password that can be selected arbitrarily by the user,
- means (114) for calculating a second private key (G2), wherein a random value (z) and the password are used in the calculation,
- means (114) for calculating a second public key (02) from the second private key by means of an asymmetric cryptographic key generation method, wherein the second private and public authorisation keys form the second asymmetric cryptographic key pair (K2),
- means (118) for generating a first cipher (C_G1_O2; 212; 186) by encrypting the first private key (G1) with the second public key (O2),
- means for storing the first cipher (212; 186),
- means for storing the random value in a database (132),
wherein the data processing system further comprises means for performing the following steps:
a) performing an admissibility check of the second private key by means of a check condition, wherein the check condition comprises the usability of the second private key for generating the second public key from the second private key by means of an asymmetric cryptographic key generation method,
b) calculating the second public key from the second private key if the check condition is met,
c) recalculating a second private key with a new random value and performing step a) again if the check condition is not met,
wherein the asymmetric cryptographic key generation method for calculating the second public key is a method based on elliptic curves, wherein the second public key is calculated by multiplication of the second private key by a curve point of an elliptic curve, wherein the check condition is the condition that the second private key is greater than one and less than the order of the elliptic curve, and
wherein the check condition is the condition that the bit length of the random value is greater than or equal to the bit length of the order of the elliptic curve.

## Revendications

1. Procédé pour la production d'une paire de clés cryptographiques asymétriques (206) d'un utilisateur, dans lequel une première clé privée (G₀, 154) forme une première paire de clés cryptographiques asymétriques (K₀, 218) de l'utilisateur ensemble avec une première clé publique (O₀, 126), le procédé comprenant les étapes suivantes :
- la réception d'un mot de passe choisi librement par l'utilisateur,
- calcul d'une deuxième clé privée (G₁), le calcul tenant compte d'une valeur aléatoire (z) et du mot de passe,
- calcul d'une deuxième clé publique (O₁) à partir de la deuxième clé privée, au moyen d'un procédé de production de clés cryptographiques asymétriques, dans lequel la deuxième clé privée et la deuxième clé publique forment la deuxième paire de clés cryptographiques asymétriques (K₁, 206),
- production d'un premier chiffrement (C_G_{0_}O₁, 212 ; 186) par le cryptage de la première clé privée (G₀) avec la deuxième clé publique (O₁),
- enregistrement du premier chiffrement (C_G₀_O₁, 212 ; 186),
- enregistrement de la valeur aléatoire dans une banque de données (132),
le procédé comprenant :
a) l'exécution d'une vérification d'autorisation de la deuxième clé privée au moyen d'un critère, dans lequel le critère comprend la possibilité d'utiliser la deuxième clé privée pour produire la deuxième clé publique à partir de la deuxième clé privée au moyen d'un procédé de production de clés cryptographiques asymétriques,
b) si le critère est satisfait, calcul de la deuxième clé publique à partir de la deuxième clé privée,
c) si le critère n'est pas satisfait, nouveau calcul d'une deuxième clé privée avec une nouvelle valeur aléatoire et une nouvelle exécution de l'étape a),
dans lequel le procédé de production de clés cryptographiques asymétriques pour le calcul de la deuxième clé publique est un procédé sur des courbes elliptiques, dans lequel la deuxième clé publique est calculée en multipliant la deuxième clé privée par un point de courbe d'une courbe elliptique, dans lequel le critère est la condition selon laquelle la deuxième clé privée est supérieure à un et inférieure au degré de la courbe elliptique, et
dans lequel le critère est la condition selon laquelle la longueur de bit de la valeur aléatoire est supérieure ou égale à la longueur de bit du degré de la courbe elliptique.

2. Procédé selon l'une des revendications précédentes, dans lequel le calcul de la deuxième clé privée comprend l'application d'une fonction unidirectionnelle f à la valeur aléatoire et d'une fonction g(mot de passe), dans lequel la fonction g est appliquée au mot de passe.

3. Procédé selon la revendication 2, dans lequel la fonction g est une autre fonction unidirectionnelle.

4. Procédé selon la revendication 3, dans lequel la fonction f et/ou la fonction g est/sont une fonction de hachage cryptographique.

5. Procédé selon l'une des revendications précédentes, dans lequel le procédé de production de clés cryptographiques asymétriques pour le calcul de la deuxième clé publique est un procédé sur des courbes elliptiques, dans lequel la deuxième clé publique est calculée en multipliant la deuxième clé privée par un point de courbe d'une courbe elliptique.

6. Procédé selon la revendication 1, dans lequel le critère est la condition selon laquelle la valeur aléatoire est choisie de manière à ce que la valeur de la deuxième clé privée produite soit inférieure au degré de la courbe elliptique.

7. Procédé selon l'une des revendications 1 à 4, dans lequel le procédé de production de clés cryptographiques asymétriques pour le calcul de la deuxième clé publique est un procédé RSA.

8. Procédé selon la revendication 1, dans lequel le procédé de production de clés cryptographiques asymétriques pour le calcul de la deuxième clé publique est un procédé RSA, dans lequel le critère est la condition selon laquelle la fonction d'Euler ϕ du modulo n utilisé pour le procédé de production de la clé RSA et la deuxième clé privée ne sont pas divisibles.

9. Procédé selon la revendication 8, dans lequel le critère est en outre la condition selon laquelle la deuxième clé privée présente une valeur comprise entre 2 et la valeur de la fonction ϕ du modulo n utilisé pour le procédé de production de la clé RSA, moins 1.

10. Procédé selon l'une des revendications précédentes, dans lequel le procédé est formé par un applet ou un plug-in de navigateur, ou est une application autonome qui se déroule sur l'ordinateur d'un lieu fiable, ou est une application qui se déroule dans un module informatique sécurisé.

11. Procédé selon l'une des revendications précédentes, le procédé comprenant en outre :
- la réception d'une troisième clé privée (G₂), dans lequel la troisième clé privée forme une troisième paire de clés cryptographiques asymétriques (K₂ ; 208) ensemble avec une troisième clé publique (O₂),
- la réception d'un deuxième chiffrement (C_G₀_O₂), dans lequel le deuxième chiffrement comprend la première clé privée (G₀) après cryptage avec la troisième clé publique (O₂),
- le décryptage du deuxième chiffrement avec la troisième clé privée (G₂) pour l'obtention de la première clé privée (G₀).

12. Procédé selon la revendication 11, dans lequel la réception de la troisième clé privée comprend les étapes suivantes :
- réception d'un autre mot de passe,
- réception d'une autre valeur aléatoire (z), l'autre valeur aléatoire étant attribuée à l'autre mot de passe,
- calcul de la troisième clé privée (G₂), le calcul tenant compte de l'autre valeur aléatoire (z) et de l'autre mot de passe.

13. Procédé selon la revendication 11, dans lequel la troisième clé privée est reçue par un support de données portable.

14. Procédé selon l'une des revendications 11 à 13, comprenant en outre l'étape d'une authentification par rapport à la banque de données, dans lequel le deuxième chiffrement est reçu par la banque de données suite à une authentification réussie.

15. Procédé selon l'une des revendications précédentes, comprenant en outre l'étape de production d'une quatrième paire de clés cryptographiques asymétriques, dans lequel une quatrième clé privée (G₃) forme la quatrième paire de clés cryptographiques asymétriques (K₃) ensemble avec une quatrième clé publique (O₃), le procédé comprenant les étapes suivantes :
- réception de la quatrième clé publique (G₃),
- production d'un quatrième chiffrement (C_G₀_O₃) par cryptage de la première clé privée (G₀) avec la quatrième clé publique (O₃),
- enregistrement du quatrième chiffrement.

16. Procédé selon l'une des revendications précédentes, dans lequel le procédé est exécuté sur un support de données portable.

17. Produit de programme informatique avec des instructions exécutables par un processeur, pour l'exécution des étapes de procédé du procédé selon l'une des revendications précédentes.

18. Système de traitement de données (100) pour la production d'une deuxième paire de clés cryptographiques asymétriques (206) d'un utilisateur, dans lequel une première clé privée (154) forme une première paire de clés cryptographiques asymétriques (K1) de l'utilisateur ensemble avec une première clé publique (01 ; 126), le système de traitement de données comprenant :
- des moyens pour la réception d'un mot de passe choisi librement par l'utilisateur,
- des moyens (114) pour le calcul d'une deuxième clé privée (G2), le calcul tenant compte d'une valeur aléatoire (z) et du mot de passe,
- des moyens (114) pour le calcul d'une deuxième clé publique (02) à partir de la deuxième clé privée, au moyen d'un procédé de production de clés cryptographiques asymétriques, dans lequel la deuxième clé privée et la deuxième clé publique d'autorisation forment la deuxième paire de clés cryptographiques asymétriques (K2),
- des moyens (118) pour la production d'un premier chiffrement (C_G1_O2, 212 ; 186) par cryptage de la première clé privée (G1) avec la deuxième clé publique (O2),
- des moyens pour l'enregistrement du premier chiffrement (212 ; 186),
- des moyens pour l'enregistrement de la valeur aléatoire dans une banque de données (132),
le système de traitement de données comprenant en outre des moyens pour l'exécution des étapes suivantes :
- a) exécution d'une vérification d'autorisation de la deuxième clé privée au moyen d'un critère, dans lequel le critère comprend la possibilité d'utiliser la deuxième clé privée pour produire la deuxième clé publique à partir de la deuxième clé privée au moyen d'un procédé de production de clés cryptographiques asymétriques,
- b) si le critère est satisfait, calcul de la deuxième clé publique à partir de la deuxième clé privée,
- c) si le critère n'est pas satisfait, nouveau calcul d'une deuxième clé privée avec une nouvelle valeur aléatoire et une nouvelle exécution de l'étape a),
dans lequel le procédé de production de clés cryptographiques asymétriques pour le calcul de la deuxième clé publique est un procédé sur des courbes elliptiques, dans lequel la deuxième clé publique est calculée en multipliant la deuxième clé privée par un point de courbe d'une courbe elliptique., dans lequel le critère est la condition selon laquelle la deuxième clé privée est supérieure à un et inférieure au degré de la courbe elliptique, et
dans lequel le critère est la condition selon laquelle la longueur de bit de la valeur aléatoire est supérieure ou égale à la longueur de bit du degré de la courbe elliptique.
